(19) **Europäisches Patentamt / European Patent Office / Office européen des brevets**

(11) **EP 4 564 065 A1**

(12) # EUROPEAN PATENT APPLICATION

(43) Date of publication:
**04.06.2025 Bulletin 2025/23**

(21) Application number: **24216128.9**

(22) Date of filing: **28.11.2024**

(51) International Patent Classification (IPC):
**G02B 1/118** (2015.01)    **G02B 5/00** (2006.01)

(52) Cooperative Patent Classification (CPC):
**G02B 1/118; G02B 5/003**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **01.12.2023  JP 2023204277**
**28.10.2024  JP 2024189078**

(71) Applicant: **CANON KABUSHIKI KAISHA**
**Tokyo 146-8501 (JP)**

(72) Inventors:
• **SASAKI, Haruka**
  **Tokyo (JP)**
• **SUZUKI, Yasuyuki**
  **Tokyo (JP)**
• **MORIMOTO, Hiroyuki**
  **Tokyo (JP)**
• **KURACHI, Kosuke**
  **Tokyo (JP)**

(74) Representative: **WESER & Kollegen**
**Patentanwälte PartmbB**
**Radeckestraße 43**
**81245 München (DE)**

(54) **STRUCTURAL BODY FOR ABSORBING LIGHT, MEMBER, OPTICAL APPARATUS, AND METHOD OF MANUFACTURING STRUCTURAL BODY**

(57)    A technology advantageous for achieving a structural body capable of sufficiently absorbing light, provided is a structural body for absorbing light, which is incident on the structural body and has a wavelength $\lambda$, the structural body including a substrate having a plurality of concave surfaces on a light incident surface. The light is incident on an inner region of each of the plurality of concave surfaces. The light satisfies 400 nm$\leq\lambda\leq$40 $\mu$m.

Each of the plurality of concave surfaces satisfies $Dd\geq Da>Db>\lambda$, $Wa>\lambda$, and $Wb\leq\lambda/2$, where $Dd$ represents a depth of a bottom of the each of the plurality of concave surfaces, $Wa$ represents a width of the inner region at a position of a distance $Da$ from the bottom of the each of the plurality of concave surfaces, and $Wb$ represents a width of the inner region at a position of a distance $Db$ from the bottom.

## FIG. 1A

EP 4 564 065 A1

**Description**

BACKGROUND

Field

The present disclosure relates to a structural body, a member, an optical apparatus, and a method of manufacturing a structural body.

Description of the Related Art

Hitherto, many technologies for enhancing anti-reflection performance have been used in components of apparatus to be affected by reflected light and scattered light. For example, stray light or the like caused by unnecessary reflected light or scattered light around an optical path of an optical apparatus such as a telescope, a microscope, or a camera may hinder acquisition of a clear image. Thus, in those optical apparatus, it is required to enhance anti-reflection performance around the optical path. As the related art, there have been known, for example, a method of using a black material around the optical path and a method of roughening a surface. However, only using the above-mentioned methods is sometimes not enough for sufficiently suppressing the reflected light or the scattered light.

As described in Japanese Patent Application Laid-Open No. 2007-304466, there is sometimes utilized a method of forming, on a component surface, a concavo-convex structure having a pitch equal to or smaller than a wavelength of incident light (structure of so-called sub-wavelength structure (SWS)). Such a technology utilizes a principle that a reflectance decreases when a refractive index of incident light gently changes at an air layer and a surface layer portion of a component surface.

Further, there is also known a technology of utilizing a structure in which, as described in International Publication No. WO2016/159045, a concavo-convex structure having a pitch larger than a wavelength of incident light is formed and a concavo-convex structure suppresses reflection of the incident light (so-called anti-reflection).

Absorption of light is insufficient only with the structure having the pitch equal to or smaller than the wavelength of the incident light as described in Japanese Patent Application Laid-Open No. 2007-304466 or the concavo-convex structure having the pitch larger than the wavelength of the incident light as described in International Publication No. WO2016/159045, and hence there is a room for improvement.

SUMMARY

The present disclosure has an aspect to provide a technology that is advantageous for achieving a structural body capable of sufficiently absorbing light.

A structural body for absorbing light which is incident on the structural body and has a wavelength $\lambda$, the structural body including a substrate having a plurality of concave surfaces on an incident surface of the light. The light is incident on an inner region of each of the plurality of concave surfaces. The light satisfies 400 nm$\leq$k$\leq$40 $\mu$m. Each of the plurality of concave surfaces satisfies Dd$\geq$Da>Db>$\lambda$, Wa>$\lambda$, and Wb$\leq$$\lambda$/2, where Dd represents a depth of a bottom of the each of the plurality of concave surfaces, Wa represents a width of the inner region at a position of a distance Da from the bottom of the each of the plurality of concave surfaces, and Wb represents a width of the inner region at a position of a distance Db from the bottom.

Further features of the present disclosure will become apparent from the following description of exemplary embodiments with reference to the attached drawings.

BRIEF DESCRIPTION OF THE DRAWINGS

FIG. 1A is a view for illustrating an example of a structural body of a first embodiment.

FIG. 1B is a view for illustrating an example that satisfies Db>k in the structural body of the first embodiment.

FIG. 2 is a view for illustrating an example of the structural body of the first embodiment.

FIG. 3 is a view for illustrating an example of the structural body of the first embodiment.

FIG. 4A is a top view for illustrating an example of the structural body of the first embodiment (example of line and space).

FIG. 4B is a sectional view for illustrating the example of the structural body of the first embodiment (example of the line and space).

FIG. 4C is a top view for illustrating an example of the structural body of the first embodiment (first example of two-dimensionally arranging a plurality of concave surfaces).

FIG. 4D is a sectional view for illustrating the example of the structural body of the first embodiment (first example of two-dimensionally arranging the plurality of concave surfaces).

FIG. 4E is a top view for illustrating an example of the structural body of the first embodiment (second example of two-dimensionally arranging the plurality of concave surfaces).

FIG. 4F is a sectional view for illustrating the example of the structural body of the first embodiment (second example of two-dimensionally arranging the plurality of concave surfaces).

FIG. 5 is an explanatory view for illustrating a taper angle.

FIG. 6A is a view for illustrating an example of the structural body of the first embodiment.

FIG. 6B is a view for illustrating an example of the structural body of the first embodiment.

FIG. 7 is a diagram for illustrating a schematic configuration of a laser processing machine to be used in a manufacturing method of a second embodiment.

FIG. 8 is a flow chart of a laser processing process in the manufacturing method of the second embodiment.

FIG. 9A is an explanatory view for illustrating an example of laser processing.

FIG. 9B is an explanatory view for illustrating an example of the laser processing.

FIG. 9C is an explanatory view for illustrating an example of the laser processing.

FIG. 9D is an explanatory view for illustrating an example of the laser processing.

FIG. 9E is an explanatory view for illustrating an example of the laser processing.

FIG. 10A is a view for illustrating an injection molding apparatus for producing a resin component according to one embodiment of the present disclosure.

FIG. 10B is a view for illustrating a step of forming a cavity in the injection molding apparatus.

FIG. 10C is a view for illustrating a step of injecting a resin into the cavity of the injection molding apparatus.

FIG. 10D is a view for illustrating a step of, after injecting the resin into the cavity, cooling the resin while keeping the pressure.

FIG. 10E is a view for illustrating a step of performing mold opening to take out the resin component.

FIG. 11 is a view for illustrating an example of an optical apparatus and a member of another embodiment.

FIG. 12 is a table for showing conditions of Examples 1 to 3 and Comparative Example 1.

FIG. 13 is a view for illustrating space definition of a simulation of Example 1.

FIG. 14 is a graph for showing results of Example 1 and Comparative Example 1.

FIG. 15 is a graph for showing results of Examples 1 to 3.

FIG. 16 is a diagram for illustrating an electric field distribution map of Example 1.

FIG. 17 is a diagram for illustrating an electric field distribution map of Example 3.

FIG. 18 is a diagram for illustrating an electric field distribution map of Example 2.

FIG. 19 is a table for showing details of Examples 4 to 6.

FIG. 20 is a table for showing details of Examples 7 to 9.

FIG. 21 is a schematic representation of mold-transfer of a mold surface.

FIG. 22 is a microscope image of a structural body of Example 6.

FIG. 23 is a view for illustrating an example of the structural body of the first embodiment.

FIG. 24 is a view for illustrating an example of the structural body of the first embodiment.

FIG. 25 is a graph for showing results of measurement of reflectances of the structural bodies.

DESCRIPTION OF THE EMBODIMENTS

<First Embodiment>

The present disclosure provides, as a first embodiment, a structural body 1 for absorbing light L which is incident on the structural body 1 and has a wavelength $\lambda$, the structural body 1 including a substrate 3 having a plurality of concave surfaces 2 on an incident surface 6 of the light L. The light L is incident on an inner region 4 of each of the plurality of concave surfaces 2. The light L satisfies 400 nm$\leq$k$\leq$40 $\mu$m. Each of the plurality of concave surfaces 2 satisfies Dd$\geq$Da>Db>$\lambda$, Wa>$\lambda$, and Wb$\leq\lambda$/2, where Dd represents a depth of a bottom 5 of the concave surface 2, Wa represents a width of the inner region 4 at a position of a distance Da from the bottom 5 of the concave surface 2, and Wb represents a width of the inner region 4 at a position of a distance Db from the bottom 5.

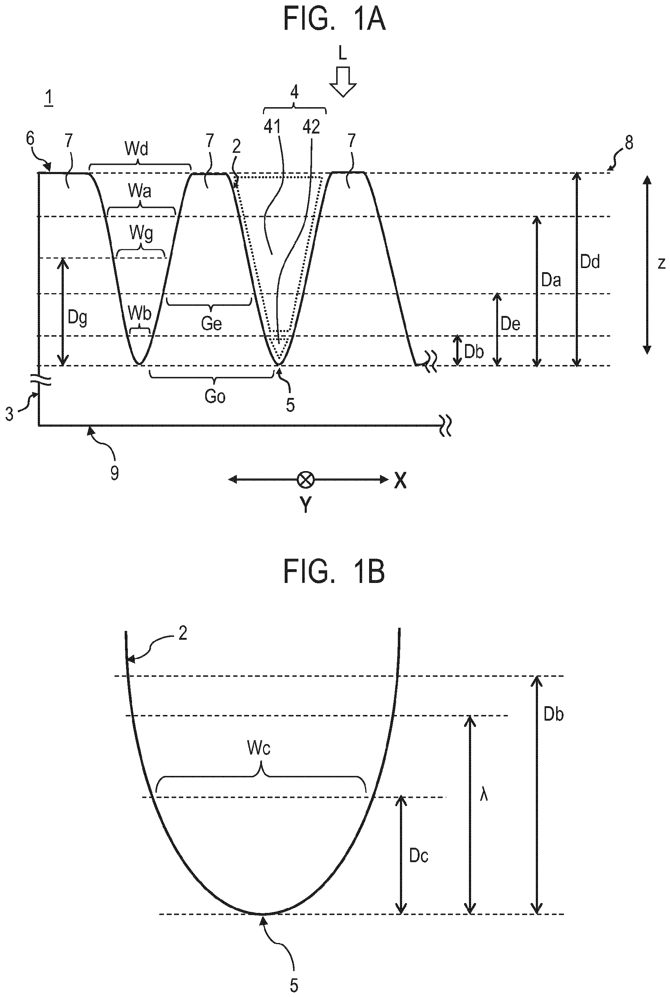

The structural body 1 of this embodiment is described with reference to FIG. 1A and FIG. 1B. FIG. 1A, FIG. 1B, FIG. 2, FIG. 3, FIG. 5, FIG. 6A, and FIG. 6B are all views obtained by enlarging a part of a cross section taken along a direction perpendicular to a reference plane 8 of the structural body 1.

The structural body 1 of this embodiment absorbs the light L having the wavelength $\lambda$ (400 nm$\leq\lambda\leq$40 $\mu$m). As illustrated in FIG. 1A, the structural body 1 includes the substrate 3 having the plurality of concave surfaces 2 on the incident surface 6 of the light L. The light L is incident on the inner region 4 of each of the plurality of concave surfaces 2. The inner region 4 of each of the plurality of concave surfaces 2 is a three-dimensional region having at least a part thereof defined by the concave surface 2, and may be a region defined between the concave surfaces 2 or a region surrounded by the concave surface 2. The inner region 4 is only required to have translucency, and is typically a vacuum space or a gas space, but may be a solid region in which a translucent material is arranged. The structural body 1 includes a convex portion 7, and a part of a surface of the convex portion 7 forms the concave surface 2 or a part of the concave surface 2. The inner region 4 is positioned between a plurality of convex portions 7 in XY-directions. In the structural body 1 of FIG. 1A, the reference plane 8 is an imaginary plane that is in contact with the plurality of convex portions 7 of the substrate 3 and covers the concave surfaces 2. A plan view with respect to the incident surface 6 is also a plan view with respect to the reference plane 8. The reference plane 8 is typically in contact with vertices of the plurality of convex portions 7. The substrate 3 has an opposite surface 9 on a side opposite to the incident surface 6 and the reference plane 8. A distance between the reference plane 8 and the opposite surface 9 is a thickness of the substrate 3. The concave surfaces 2 are recessed toward the bottom 5 of the concave surface 2 from the reference plane 8. The convex portions 7 protrudes from the bottom 5 of the concave surface 2 toward the reference plane 8. Therefore, the concave surfaces 2 may be referred to as recessed surface, and the convex portions 7 may be referred to as protruding portions. The concave surface 2 is recessed in a direction toward the bottom 5 from the reference plane 8. The convex portion 7 protrudes from the bottom 5 in a direction toward the reference plane 8. That is, the concave surface 2 may be referred to as "recessed surface", and the convex portion 7 may be referred to as "protruding portion".

As illustrated in FIG. 1A, a depth from the reference plane 8 to the bottom 5 of the concave surface 2 is represented by Dd. In other words, a distance between the reference plane 8 and the bottom 5 is the depth Dd. The width of the inner region 4 at a position of the distance Da from the bottom 5 in a direction Z perpendicular to the reference plane 8 is represented by Wa. Further, the width of the inner region 4 at a position of the distance Db from the bottom 5 in the direction Z perpendicular to the reference plane 8 is represented by Wb. The depth of the concave surface 2 refers to a depth from the reference plane 8 in the direction Z perpendicular to the reference plane 8. In each figure, X and Y indicate directions perpendicular to each other and perpendicular to Z.

The structural body 1 satisfies Expressions 1 to 3 below.

$Dd \geq Da > Db > \lambda$ (Expression 1), $Wa > \lambda$ (Expression 2), and $Wb \leq \lambda/2$ (Expression 3).

FIG. 1B shows that the structural body 1 satisfies $Db > \lambda$ in Expression 1.

The depth Dd of the concave surface 2 and the widths Wa and Wb of the inner region 4 can each be determined in a certain cut surface of the structural body 1 which is parallel to the direction Z perpendicular to the reference plane 8. It is preferred that the depth Dd of the concave surface 2 and the widths Wa and Wb of the inner region 4 be determined in a surface perpendicular to the structural body 1 in which, for each of the concave surfaces 2, the depth thereof becomes maximum and the width of the inner region 4 at the outermost surface of the structural body 1 becomes minimum.

The light L to be absorbed by the structural body 1 is an electromagnetic wave including at least one of a visible light ray or an infrared ray, and the light L has a wavelength $\lambda$ of 400 nm $\leq \lambda \leq$ 40 $\mu$m. However, the structural body 1 can be configured to absorb an ultraviolet ray in addition to the at least one of the visible light ray or the infrared ray. The wavelength $\lambda$ is preferably $\lambda \leq 4$ $\mu$m, more preferably $\lambda \leq 3$ $\mu$m, further more preferably $\lambda \leq 2.5$ $\mu$m. The wavelength of 40 $\mu$m can be regarded as a boundary between the mid-infrared ray and the far-infrared ray. The wavelength of 4 $\mu$m can be regarded as a boundary between the mid-infrared ray and the far-infrared ray. The wavelength of 3 $\mu$m can be regarded as a boundary between the near-infrared ray and the mid-infrared ray. The wavelength of 2.5 $\mu$m can be regarded as a boundary between the near-infrared ray and the mid-infrared ray. The wavelength $\lambda$ may satisfy $\lambda > 1$ $\mu$m or $\lambda > 800$ nm, or may satisfy $\lambda \leq 1$ $\mu$m or $\lambda \leq 800$ nm. The wavelength of 800 nm can be regarded as a boundary between the visible light ray and the infrared ray, and the wavelength of 400 nm can be regarded as a boundary between the visible light ray and the ultraviolet ray. Which wavelength $\lambda$ is used at the target of absorption by the structural body 1 may be determined depending on the application of the structural body 1. It is preferred that Expressions 1 to 3 above be satisfied even when, regarding a plurality of wavelengths $\lambda a$ and $\lambda b$ in the visible light ray and the infrared light ray, the wavelength $\lambda$ satisfies $\lambda = \lambda a$ or $\lambda = \lambda b$. Both of the wavelength $\lambda a$ and the wavelength $\lambda b$ may be in a wavelength range of the visible light ray, and both of the wavelength $\lambda a$ and the wavelength $\lambda b$ may be in a wavelength range of the infrared light ray. Further, the wavelength $\lambda a$ may be in the wavelength range of the visible light ray, and the wavelength $\lambda b$ may be in the wavelength range of the infrared light ray.

In the following, in some cases, a part in the inner region 4 from the distance Db to the distance Dd is referred to as "first part 41," and a part therein from the concave surface bottom (that is, a distance 0 from the bottom 5) to the distance Db is referred to as "second part 42."

The structural body 1 of this embodiment can efficiently absorb the light L, and can prevent or reduce reflection. The inventors consider the reason therefor as follows. That is, when Wa being an opening width of the first part 41 is larger than $\lambda$, the light L having the wavelength $\lambda$ can be guided to the concave surface 2 by diffraction and propagation. Further, the light L that has been directly incident on the second part 42 without hitting the concave surface 2 forming the first part 41 is reduced in the effect of diffraction and propagation of the light L because $Db > \lambda$ and $Wb \leq \lambda/2$ are satisfied. Thus, the light L can be absorbed and the intensity of the light L can be reduced.

Da and Db are selected so as to satisfy Expressions 1 to 3. $Da \approx Dd$ may be satisfied, that is, the position of the distance Da from the bottom 5 of the concave surface 2 may be the reference plane 8. However, also in this case, fine unevenness caused by the undulating substrate surface is disregarded for Da, and hence Da and Dd are not required to completely match each other. In this case, Wd being an opening width in the reference plane 8 satisfies $Wa \approx Wd$. Examples below all satisfy $Da \approx Dd$ and $Wa \approx Wd$.

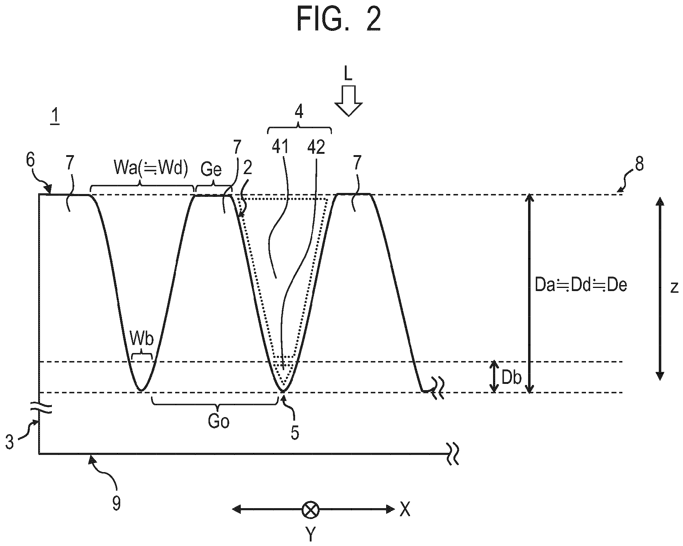

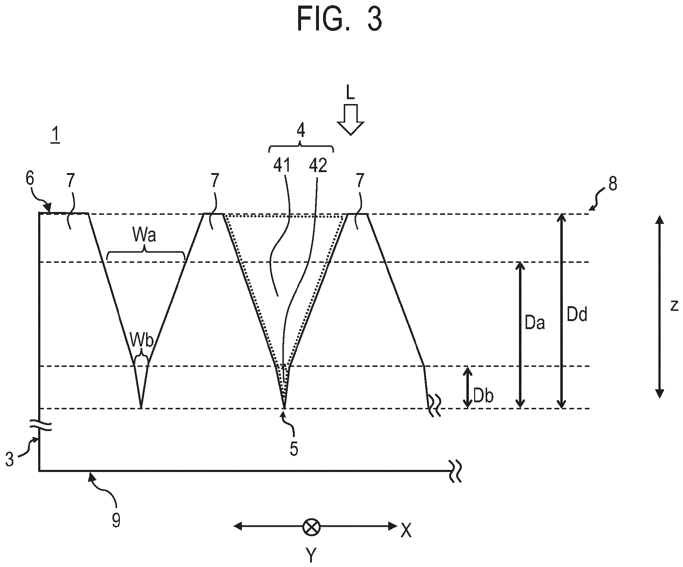

FIG. 2 shows an example that satisfies $Dd \approx Da$ and $Wa \approx Wd$. Further, FIG. 3 shows an example in which the concave surface 2 forming the first part 41 and the concave surface 2 forming the second part 42 have different slopes, and the concave surface 2 forming the second part 42 has a steeper slope.

The concave surface 2 as used herein refers to the concave surface 2 satisfying Expressions 1 to 3, and the structural body 1 of this embodiment may include another concave surface 27. The another concave surface 27 is a concave surface that does not satisfy at least one of Expressions 1 to 3. Further, the plurality of concave surfaces 2 are each only required to satisfy Expressions 1 to 3, and the plurality of concave surfaces 2 may have different shapes and vary in Da, Db, Dd, Wa, and Wb as long as Expressions 1 to 3 are satisfied. As described later, also in the case of the description about Dc, De, Df, Ge, Go, and a taper angle, the plurality of concave surfaces 2 may have different values thereof.

The number of the plurality of concave surfaces 2 or the number of the convex portions 7 forming the plurality of concave surfaces 2 is, in plan view with respect to the incident surface 6, that is, when the structural body 1 is viewed in top view from the Z-direction, preferably 3 surfaces or portions/mm$^2$ or more, more preferably 5 surfaces or portions/mm$^2$ or more, further more preferably 10 surfaces or portions/mm$^2$ or more, still more preferably 100 surfaces or portions/mm$^2$ or more, yet more preferably 1,000 surfaces or portions/mm$^2$ or more. The number of the plurality of concave surfaces 2 or the number of the convex portions 7 forming the plurality of concave surfaces 2 is, in plan view with respect to the incident surface 6, preferably 1,000,000 surfaces or portions/mm$^2$ or less, more preferably 100,000 surfaces or portions/mm$^2$ or less, further more preferably 10,000 surfaces or portions/mm$^2$ or less.

Wa is Wa>$\lambda$, and Wa is preferably Wa$\geq$2$\lambda$, more preferably Wa$\geq$4$\lambda$. Further, Wa is preferably Wa$\leq$100$\lambda$, more preferably Wa$\leq$40$\lambda$.

Further, Wa is preferably Wa>1 $\mu$m, more preferably Wa$\geq$10 $\mu$m.

Wa is preferably Wa$\leq$300 $\mu$m, more preferably Wa$\leq$200 $\mu$m, further more preferably Wa$\leq$100 $\mu$m, still more preferably Wa$\leq$70 $\mu$m.

When Wa>$\lambda$ is satisfied, the opening width of the first part 41 is sufficiently large, and the light L is efficiently captured in the concave surface 2 to cause light trapping. Further, when Wa is large and the opening width of the first part 41 is sufficiently large, the structural body 1 can be easily manufactured.

Wb is Wb$\leq$$\lambda$/2, and Wb is preferably Wb$\geq$$\lambda$/4, but may be Wb<$\lambda$/4. Further, Wb is preferably Wb$\leq$400 nm, but Wb may be Wb$\leq$200 nm and is preferably Wb$\geq$100 nm.

When Db>$\lambda$ and Wb$\leq$$\lambda$/2 are satisfied, in the second part 42, the depth is deep with respect to the opening width. Thus, the diffraction and propagation of the light L can be weakened so that the light L is absorbed, and hence the intensity of the light L is reduced so that the reflection can be prevented.

The effect of the absorption with respect to the visible light ray is visually checked. That is, when the structural body 1 absorbs the light L in a wide wavelength range of the visible light ray, the incident surface 6 may look black. Moreover, based on an electromagnetic field simulation using the FDTD method shown in Example 1, when the electromagnetic field distribution in a specific wavelength is 0.85 or less, it can be determined that there is no reflection.

Dd is Dd>k, and Dd is preferably Dd>2k, more preferably Dd$\geq$4$\lambda$, further more preferably Dd$\geq$5$\lambda$, still more preferably Dd$\geq$10$\lambda$, yet more preferably Dd$\geq$100$\lambda$.

Further, Dd is preferably Dd>10 $\mu$m, more preferably Dd$\geq$100 $\mu$m. In addition, Dd is preferably Dd$\leq$1,000 $\mu$m.

When Dd is sufficiently large, the concave surface 2 is sufficiently wide. When the concave surface 2 is sufficiently wide, the number of times of reflection from when the light L is incident on the structural body 1 to when the light L returns to the reference plane 8 is large. Thus, sufficient light trapping occurs even for the light L that has not been sufficiently absorbed in the second part 42, even while the light L returns to the reference plane 8 from the second part 42. Thus, the light L is absorbed and the reflection is suppressed. Further, when the concave surface 2 is sufficiently wide, the light L is reflected from various directions to cause diffraction, and thus the waves of the light L can be effectively canceled out with each other.

Thus, in particular, Dd-Da is preferably Dd-Da>k, more preferably Dd-Da>2$\lambda$, further more preferably Dd-Da$\geq$4$\lambda$, still more preferably Dd-Da$\geq$5$\lambda$, yet more preferably Dd-Da$\geq$10$\lambda$, even more preferably Dd-Da$\geq$100$\lambda$.

In the inner region 4, Dd$\geq$Da>Db>$\lambda$ is satisfied, but it is preferred that Da>Dd/2 be satisfied, and it is preferred that Db<Dd/2 be satisfied. When Da>Dd/2 is satisfied, the light L is easily captured in the upper half of the inner region 4 (entrance side for the light L). When Db<Dd/2 is satisfied, the light L that has been incident on the lower half of the inner region 4 from the upper half is easily absorbed.

Further, as illustrated in FIG. 1B, in the structural body 1 of this embodiment, it is preferred that a width Wc of each of a plurality of regions at a position of a distance Dc from the bottom 5 of each of the plurality of concave surfaces 2 satisfy Dc$\leq$$\lambda$ and Wc$\leq$$\lambda$/4. When a part having a narrow width is provided at a position close to the bottom 5, while a large number of times of reflection are repeated, the diffraction and the propagation of the light L are weakened so that the light L is absorbed, and hence the intensity of the light L is reduced.

Further, in the structural body 1 of this embodiment, it is preferred that the plurality of concave surfaces 2 include a first concave surface 2 and a second concave surface 2, and a distance Ge between the first concave surface 2 and the second concave surface 2 at a position of a distance De (provided that Dd$\geq$De$\geq$Db) from the bottom 5 of the first concave surface 2 satisfy Ge$\leq$100 $\mu$m. The first concave surface 2 and the second concave surface 2 are typically concave surfaces 2 formed of the common convex portion 7. Ge is more preferably Ge$\leq$10 $\mu$m, further more preferably Ge$\leq$1 $\mu$m. Further, Ge pre-

ferably satisfies Ge<Wa. Da≥De≥Db may be satisfied, and FIG. 1A shows an example that satisfies Da>De>Db. As another example, Dd≥De≥Da may be satisfied, and the position at the distance De from the bottom 5 of the concave surface 2 may be a position where the reference plane 8 lies (that is, De may be equal to Dd). However, also in this case, fine unevenness caused by the undulating substrate surface is disregarded for De, and hence De and Dd are not required to completely match each other. FIG. 2 shows an example that satisfies De≈Dd. In this case, Ge is an interval between the concave surface 2 and the concave surface 2 when the structural body 1 is viewed in top view.

Further, it is preferred that a distance Go between the bottom 5 of the first concave surface 2 and the bottom 5 of the second concave surface 2 satisfy Go>1 μm. Go more preferably satisfies Go≥5 μm, and further more preferably satisfies Go≥10 μm. Go preferably satisfies Go≤100 μm.

It is preferred that Go satisfy Go>1 μm. Further, Go preferably satisfies Go≤100λ, and more preferably satisfies Go≤40λ.

Go preferably satisfies Go≤300 μm, more preferably satisfies Go≤200 μm, further more preferably satisfies Go≤100 μm, and still more preferably satisfies Go≤70 μm.

Further, Go≥Wa is preferably satisfied.

Further, in the structural body 1 of this embodiment, it is preferred that a width Wg of the inner region 4 at a distance Dg from the bottom 5 satisfy Db<Dg<Da and Wg=λ. That is, it is preferred that "width Wa">λ be satisfied at the distance Da, "width Wg"=λ be satisfied at the distance Dg, and "width Wb"≤λ/2 be satisfied at the distance Db. FIG. 1A shows an example that satisfies "distance Dg">De, but "distance Dg"≤De or Dg=De may be satisfied.

When Go>1 μm is satisfied, the diffraction of the light L can be prevented, and further the structural body 1 can be easily manufactured. Further, when Go≤300 μm is satisfied, a sufficient number of concave portions can be obtained for absorbing the incident light and obtaining the anti-reflection effect.

The cycle of the inner region 4 is sometimes referred to as "pitch." The pitch corresponds to an average value of Go, or, at the time of De≈Dd as illustrated in FIG. 2, the pitch corresponds to an average value of (Wa+Ge).

Further, in the structural body 1 of this embodiment, it is preferred that an extinction coefficient of the substrate 3 with respect to the light L be larger than 1.0. The extinction coefficient of a material for forming the substrate 3 with respect to the light L is more preferably 2.0 or more, further more preferably 4.0 or more.

A large extinction coefficient of the substrate 3 is advantageous for sufficiently reducing the intensity of the light L by the structural body 1. When the extinction coefficient of the substrate 3 is small, the light L is easily incident on the substrate 3, and the absorbing effect by the concavo-convex shape cannot be sufficiently obtained.

Further, in the structural body 1 of this embodiment, the substrate 3 is opaque with respect to the light L having the wavelength λ, that is, reflects or absorbs the light L having the wavelength λ. Specifically, it is preferred that a transmittance of the light L with respect to the substrate 3 be less than 1%. The transmittance is obtained in consideration of the thickness of the substrate 3.

When the transmittance of the light L of the substrate 3 is sufficiently small, the structural body 1 can sufficiently absorb the light L and thus reduce the intensity of the light L.

In the structural body 1 of this embodiment, in plan view with respect to the incident surface 6, that is, when the structural body 1 is viewed in top view from the Z-direction, the shape or the XY sectional shape of the concave surface 2 is not limited. Examples of the shape include a circle, an ellipse, a rectangle, a polygon, a line, any other shapes, and a combination thereof. Further, the three-dimensional shape of the concave surface 2 is not particularly limited. The XZ sectional shape may be a triangle, a polygon, a shape having a curved surface, a parabola, a catenary curve, or other shapes. Further, the three-dimensional shape may be shapes obtained by rotating those shapes, a bullet shape, or so-called line and space in which the same sectional shape continues in the Y-direction. In plan view with respect to the incident surface 6, it is preferred that the plurality of concave surfaces 2 be two-dimensionally arranged.

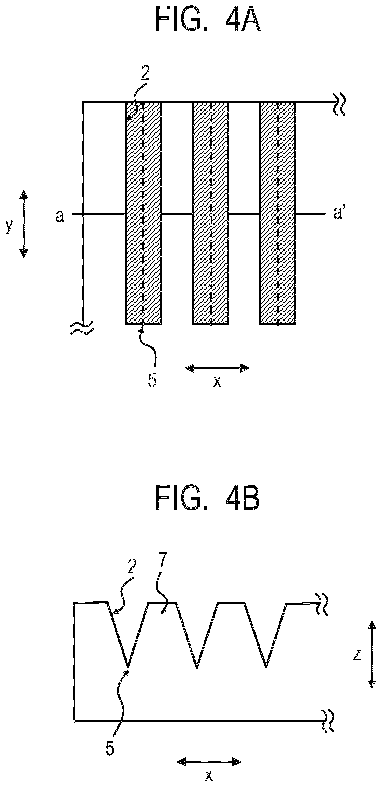

In an example of the line and space, as exemplified in FIG. 4A and FIG. 4B for showing an a-a' cross section of FIG. 4A, each of the plurality of concave surfaces 2 is a groove having a longitudinal direction along the Y-direction and a transverse direction along the X-direction in plan view with respect to the incident surface 6, and the grooves are arranged side by side along the X-direction (transverse direction).

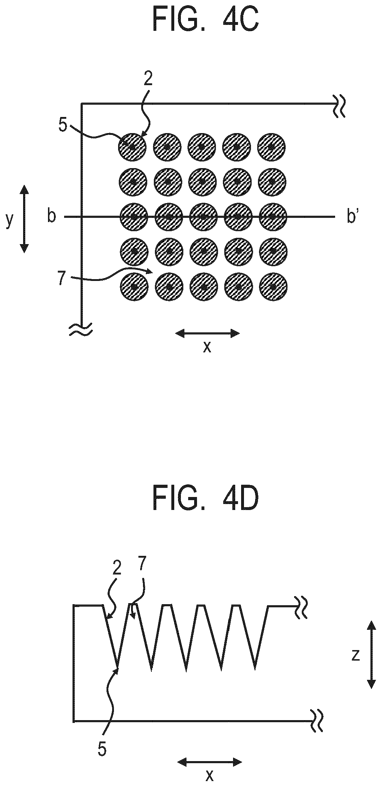

In a first example of two-dimensionally arranging the plurality of concave surfaces 2, as exemplified in FIG. 4C and FIG. 4D for showing a b-b' cross section of FIG. 4C, the plurality of concave surfaces 2 are arranged side by side along the X-direction and the Y-direction. Each of the concave surfaces 2 is surrounded by the continuous convex portion 7. In this example, it is easier to evaluate the number of concave surfaces than to evaluate the number of convex portions.

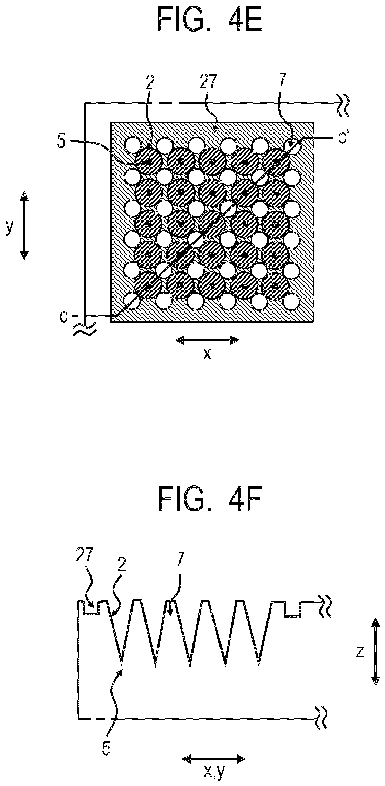

In a second example of two-dimensionally arranging the plurality of concave surfaces 2, as exemplified in FIG. 4E and FIG. 4F for showing a c-c' cross section of FIG. 4E, the plurality of concave surfaces 2 are arranged side by side along the X-direction and the Y-direction. Each of the concave surfaces 2 is located between the discretely-arranged convex portions 7. FIG. 4E shows, in addition to the concave surface 2, the another concave surface 27 positioned between the concave surfaces 2 and between the convex portions 7 in the X-direction and the Y-direction. The another concave surface 27 is shallower than the concave surface 2. In this example, it is easier to evaluate the number of convex portions than to evaluate the number of concave surfaces.

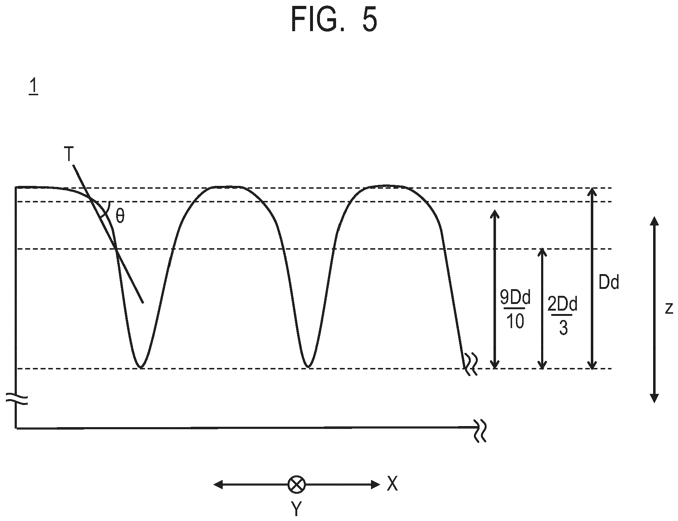

Further, in the structural body 1 of this embodiment, each of the concave surfaces 2 preferably has, in a part in which the distance from the bottom 5 is 2Dd/3 or more and 9Dd/10 or less, a taper angle θ of 60 degrees or more. The taper angle θ is more preferably 75 degrees or more. The taper angle θ is described with reference to FIG. 5. A straight line connecting a position at which the distance from the bottom 5 of the concave surface 2 is 2Dd/3 and a position at which the distance from the bottom 5 is 9Dd/10 is represented by T. An angle formed between the straight line T and a plane parallel to the structural body upper surface is the taper angle θ.

When the taper angle θ is 60 degrees or more, the slope of the concave surface 2 in the vicinity of the reference plane 8 is sufficient, and the light L is absorbed while being reflected a large number of times by the concave surface 2 so that the reflection is reduced. Further, when the slope of the concave surface 2 in the vicinity of the reference plane 8 is sufficient, the light L is efficiently guided to a deep part of the concave portion so that the intensity of the light L is efficiently reduced.

Further, in the structural body 1 of this embodiment, the width of the inner region 4 gradually decreases from the position of the distance Da from the bottom 5 toward the position of the distance Db from the bottom 5.

That is, in the inner region 4, the width at the deeper position is the same or smaller than the width at the shallower position. The term "deep" refers to being closer to the bottom 5, and the term "shallow" refers to having a closer distance to the reference plane 8. The inner region 4 may have a part with a constant width.

When the width of the inner region 4 gradually decreases, the light L is efficiently guided to a deep part of the concave surface 2 so that the intensity of the light L is efficiently reduced. Further, when the concave surface 2 is formed such that the width of the inner region 4 gradually decreases, the structural body 1 can be easily manufactured.

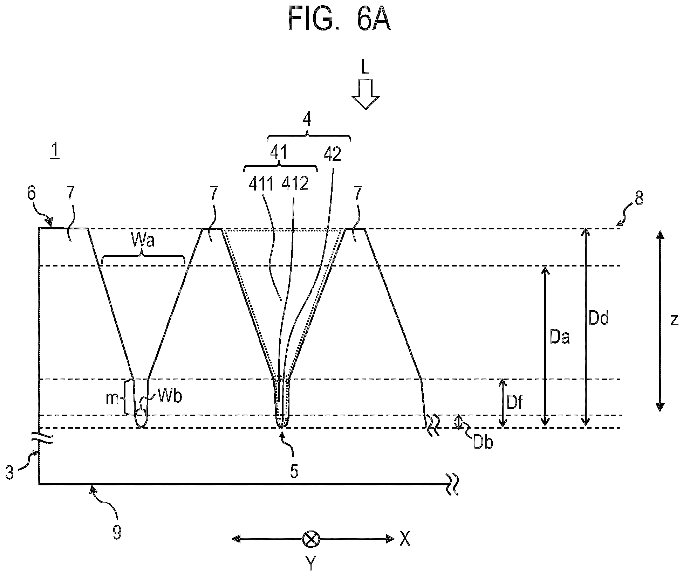

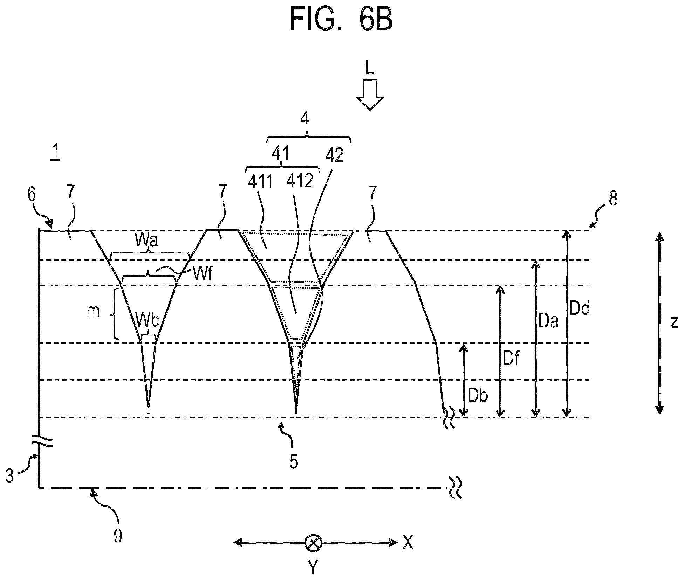

Further, in the structural body 1 of this embodiment, the plurality of concave surfaces 2 can include a concave surface 2 in which, from the distance Db to a distance Df (provided that Da≥Df>Db) from the bottom 5 of the concave surface 2, the width of the inner region 4 is Wb or more and λ/2 or less. This example is shown in FIG. 6A and FIG. 6B. In FIG. 6A and FIG. 6B, the concave surface 2 has an intermediate portion "m" from Db to Df in which the width of the inner region 4 at any position therein is Wb or more and λ/2 or less. In the example of FIG. 6A, Dd>Da is satisfied, and, in the concave surface 2, a slope from the bottom 5 to Db, a slope from Db to Df, and a slope from Df to Da are different from each other, and, from Db to Df, the width is substantially constant and is Wb or more and λ/2 or less. The inner region 4 formed by the intermediate portion "m" is sometimes referred to as "middle portion 412." The middle portion 412 is a part of the first part 41. FIG. 6A and FIG. 6B show a part 411 obtained by excluding the middle portion 412 from the first part 41.

In the example of FIG. 6B, Dd>Da is satisfied, and, in the concave surface 2, a slope from the bottom 5 to Db, a slope from Db to Df, and a slope from Df to Da gradually decrease along the distance from the bottom 5.

With the middle portion 412 being provided, the number of times of reflection from when the light L is incident on the structural body 1 to when the light L returns to the reference plane 8 is increased. Thus, the light L is sufficiently absorbed, and hence the intensity thereof is reduced so that the reflection is prevented.

In addition, in the structure 1 of this embodiment, the base material 3 can be made of a metal.

The metal includes an alloy, and examples thereof include aluminum, titanium, tungsten, copper, iron, nickel, and stainless steel. Of those, aluminum is preferred.

Further, in the structural body 1 of this embodiment, the substrate 3 can be made of a resin.

The substrate 3 may have any shape depending on the purpose, and can have a shape of, for example, a flat surface, a curved surface, an inclined surface, and a shape including a plurality of those surfaces.

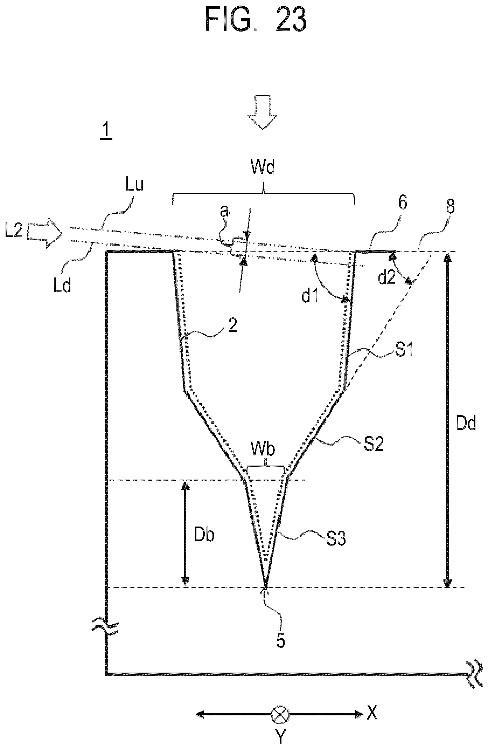

One example of the structural body 1 of this embodiment is described with reference to FIG. 23. FIG. 23 is a view obtained by enlarging a part of a cross section taken along a direction perpendicular to the reference plane 8 of the structural body 1. Each of the plurality of concave surfaces 2 includes a first inclined surface S1 and a second inclined surface S2. The second inclined surface S2 is positioned on a side closer to the bottom 5 than the first inclined surface S1. An angle d1 formed between the first inclined surface S1 and the reference plane 8 and an angle d2 formed between the second inclined surface S2 and the reference plane 8 can satisfy d1>d2. The reference plane 8 is an imaginary plane that is in contact with a plurality of convex portions 7 forming the concave surface 2.

The first inclined surface S1 may be an inclined surface positioned at a distance of 2Dd/3 and higher from the bottom 5. The second inclined surface S2 may be an inclined surface connecting to the first inclined surface S1. Further, the concave surface 2 may include a third inclined surface S3. The third inclined surface S3 is an inclined surface extending from the second inclined surface S2 and connecting to the bottom 5. Each of the inclined surfaces corresponds to a portion of the concave surface 2, which defines the inner region 4 having a width gradually decreasing toward the bottom 5 at a substantially constant rate (as described later, however, each of the inclined surfaces may have specific waviness or roughness in shape).

The concave surface 2 includes the first inclined surface S1, the second inclined surface S2, and the third inclined surface S3. The first inclined surface S1 is formed in the vicinity of a vertex of the convex portion 7. The second inclined surface S2 is positioned on the side closer to the bottom 5 of the concave surface 2 than the first inclined surface S1 and extends from the first inclined surface S1 in a direction toward the bottom 5. The third inclined surface S3 extends from the second inclined surface S2 in the direction toward the bottom 5 and connects to the bottom 5. When the plane being in contact with the plurality of convex portions forming the concave surface is defined as the reference plane 8, the angle d1 formed between the first inclined surface S1 and the reference plane 8 is larger than the angle d2 formed between the second inclined surface S2 extending from the first inclined surface S1 toward the bottom 5 of the concave surface 2 and the reference plane 8.

In addition to the light L that is incident on the structural body 1 at an angle $\alpha$ being equal to or about 90 degrees with respect to the reference plane 8, light L2 may be incident on the structural body 1 from a direction being nearly parallel to the reference plane 8. An angle formed between the light L2 and the reference plane 8 is referred to as "angle $\beta$". The angle $\alpha$ formed between the light L and the reference plane 8 is typically larger than the angle $\beta$, and is typically 90 degrees. For simplification, there is now considered a case in which the light L2 is specularly reflected by the first inclined surface S1. When the light L2 is incident on the first inclined surface S1 at the angle $\beta$ and the angle d1 of the first inclined surface S1 is equal to 90-$\beta$ degrees, the light L2 is reflected by the first inclined surface S1 in the same direction as an incident direction of the light L2. When the angle d1 of the first inclined surface S1 is smaller than 90-$\beta$ degrees, the light L2 being incident on the first inclined surface S1 at the angle $\beta$ is reflected to a side opposite to the bottom 5 (to the reference plane 8 side). When such reflection occurs, the reflected light cannot be absorbed by the structural body 1, and thus an absorption property of the structural body 1 is reduced. When the angle d1 of the first inclined surface S1 is larger than 90-$\beta$ degrees, the light L2 being incident at the angle $\beta$ is reflected by the first inclined surface S1 toward the bottom 5. Thus, the reflected light can be absorbed by the concave surface 2. The angle $\beta$ may be set to various angles depending on a purpose of use of the structural body 1. In general, the angle $\beta$ is less than 20 degrees and may be equal to or smaller than 10 degrees. A region between two normals Lu and Ld to the first inclined surface S1, which extend in parallel to the incident direction of the light L2, is represented by "a". Then, the light L2 passing through the region "a" is reflected by the first inclined surface S1, and thus light absorption efficiency is reduced. A length of the region "a" decreases as d1 increases. Thus, in order to suppress the reflection of the light L2, it is only required that d1 be maximized. Meanwhile, conditions for the width of the inner region, which enable efficient absorption of the light L, are Wd>$\lambda$ and Wb≤$\lambda$/2. When Wb≤$\lambda$/2 is intended to be satisfied while maximizing d1, the depth Dd of the concave surface 2 becomes extremely large. As a result, processing time is remarkably increased when a laser processing manufacturing method described later is used. Thus, maximizing d1 while satisfying the conditions described above is not practical.

Thus, the second inclined surface S2 is formed between the first inclined surface S1 and the third inclined surface S3, and the angle d2 formed between the second inclined surface S2 and the reference plane 8 is set so as to satisfy d2<d1. In this manner, d1 can be maximized without changing Dd.

It is preferred that the angle d1 formed between the first inclined surface S1 and the reference plane 8 be 80 degrees or more, more preferably 85 degrees or more, further preferably 86 degrees or more, further more preferably 88 degrees or more. A maximum value of the angle d1 is 90 degrees. In this case, it is preferred that the angle d2 formed between the second inclined surface S2 and the reference plane 8 be 55 degrees or less, more preferably 50 degrees or less, further preferably 45 degrees or less, further more preferably 42 degrees or less. It is preferred that the angle d2 be half or less of the angle d1. The configuration described above enables minimization of the reflection of the light L2 and efficient absorption of the light L.

The number of inclined surfaces forming each of the concave surfaces 2 is not limited to three. It is desirable that the angle d1 formed between the first inclined surface S1 and the reference plane 8 be the maximum value. However, when the light L2 has low intensity and does not cause any problem in practical use, the angle d1 may be appropriately adjusted in accordance with an allowable range for the reflected light. Further, it is only required that the angle d1 formed between the first inclined surface S1 and the reference plane 8 be larger than the angle d2 formed between the second inclined surface S2 extending from the first inclined surface S1 toward the bottom 5 of the concave surface 2 and the reference plane 8 for each of the plurality of concave surfaces 2. As long as this relationship between the angles is satisfied, the shape and the angle of each of the plurality of concave surfaces 2 may be different, and lengths of the first inclined surface S1, the second inclined surface S2, and the third inclined surface S3, the angles d1 and d2, and the length of the region "a" may be different.

Further, when the laser processing manufacturing method described later is used, a processed surface has specific roughness. Each of the first inclined surface S1, the second inclined surface S2, and the third inclined surface S3 may have specific waviness or roughness in shape, and each boundary between the inclined surfaces may be indistinct. In such a case, the angle d1 is an average value for the first inclined surfaces S1 which may have the shapes described above. When an average value of the angles d1 in the whole structural body 1 is large, the length of the region "a" in the whole structural body 1 becomes correspondingly small. Thus, the reflection of the light L2 can be minimized.

Each of the plurality of concave surfaces may include a first curved surface and a second curved surface positioned closer to the bottom of the concave surface than the first curved surface, and a center of the first curved surface can lie inside the concave surface, and a center of the second curved surface can lie outside the concave surface.

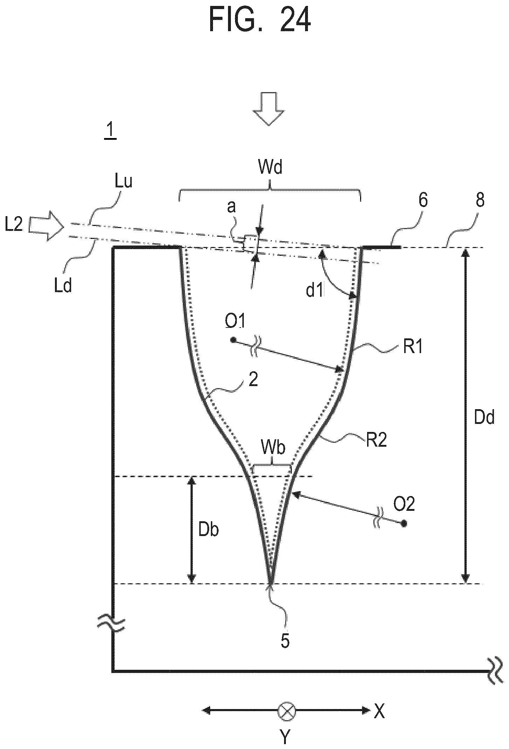

This example of the embodiment is described with reference to FIG. 24. FIG. 24 is obtained by enlarging a part of a cross section taken along a direction perpendicular to the reference plane 8 of the structural body 1.

A center $O_1$ of a first curved surface R1 ("center of a curved surface" refers to a center of a circle having a circumference including a part approximating to the curved surface) lies inside the concave surface 2. In other words, the curved surface R1 has an outwardly convex shape with respect to the concave surface 2. A center $O_2$ of a second curved surface R2 extending from the first curved surface R1 toward the bottom 5 of the concave surface 2 and connecting to the bottom 5 lies outside the concave surface 2. In other words, the second curved surface R2 has an inwardly convex shape with respect to the curved surface 2.

In addition to the light L, the light L2 is incident on the structural body 1 from a direction substantially parallel to the incident surface 6.

A region between two normals Lu and Ld to the first curved surface R1, which extend in parallel to an incident direction of the light L2, is represented by "a". Then, the light L2 passing through the region "a" is reflected by the first curved surface R1, and thus light absorption efficiency is reduced. A length of the region "a" decreases as the angle d1 formed between the first curved surface R1 and the reference plane 8 increases. Thus, in order to suppress the reflection of the light L2, it is only required that d1 be maximized. Specifically, it is only required that the center $O_1$ of the curved surface R1 that allows maximization of d1 be set inside the curved surface R1 of the concave surface 2. Meanwhile, conditions for enabling efficient absorption of the light L are Wd>$\lambda$ and Wb≤$\lambda$/2. When Wb≤$\lambda$/2 is intended to be satisfied while d1 is maximized, a depth of the concave surface 2 becomes extremely large. As a result, processing time is remarkably increased when the laser processing manufacturing method described later is used. Thus, maximizing d1 while satisfying the conditions described above is not practical.

Accordingly, the second curved surface R2 extending from the first curved surface R1 toward the bottom 5 of the concave surface 2 is formed so that the second curved surface R2 has a shape with its center $O_2$ lying outside the concave surface 2. In this manner, d1 can be maximized without changing Dd.

It is preferred that the angle d1 formed between the first curved surface R1 and the reference plane 8 be 80 degrees or more, more preferably 85 degrees or more, further preferably 86 degrees or more, further more preferably 88 degrees or more. A maximum value of the angle d1 is 90 degrees. The configuration described above enables minimization of the reflection of the light L2 and efficient absorption of the light L.

The number of curved surfaces for forming each of the concave surfaces 2 is not required to be limited to two. It is desired that the angle d1 formed between the first curved surface R1 and the reference plane 8 have the maximum value. However, when the light L2 has low intensity and does not cause any problem in practical use, the angle d1 may be appropriately adjusted in accordance with an allowable range for the reflected light.

Further, it is only required that the center $O_1$ of the first curved surface R1 of each of the plurality of concave surfaces 2 lie inside the concave surface 2 and the center $O_2$ of the second curved surface R2 extending from the first curved surface R1 toward the bottom 5 of the concave surface 2 and connecting to the bottom 5 lie outside the concave surface 2. As long as the above-mentioned conditions are satisfied, the shape or the angle of each of the plurality of concave surfaces 2 may be different, and a length or a center position of the curved surface of each of the first curved surface R1 and the second curved surface R2, the angle d1, the length of the region "a" may be different.

Further, when the laser processing manufacturing method described later is used, a processed surface has specific roughness. Each of the first curved surface R1 and the second curved surface R2 may have specific waviness or roughness in shape, and each boundary between the curved surfaces may be indistinct. In such a case, the angle d1 is an average value for the first curved surfaces R1 which may have the shapes described above. When an average value of the angles d1 in the whole structural body 1 is large, the length of the region "a" in the whole structural body 1 becomes correspondingly small. Thus, the reflection of the light L2 can be minimized.

<Second Embodiment>

The present disclosure provides, as a second embodiment, a method of manufacturing the structural body 1 of the first embodiment including forming the substrate by subjecting a base material to laser processing. Moreover, as a first example of the laser processing, the laser processing can include a first step of applying, in a main scanning direction, a pulse laser having an irradiation width Pa onto a first column of the base material, a second step of applying, in the main scanning direction, the pulse laser having the irradiation width Pa onto the first column further (N-1) times while shifting an irradiation position by Pb in the main scanning direction from the first step, a third step of performing scanning so that the irradiation position is shifted by Pc in a sub-scanning direction, a fourth step of performing the first step and the second step at a position shifted by Pc in the sub-scanning direction, and a fifth step of repeating the third step and the fourth step once or a plurality of times.

Further, an irradiation diameter of the pulse laser is represented by φ, and Pa, Pb, and Pc satisfy φ/2<Pa<φ, Pb=φ/N, and Pc<φ. Further, Pb is not required to be strict and may be zero.

Further, as a second example of the laser processing, the laser processing can include a first step of applying, in a main scanning direction, a pulse laser having an irradiation width Pa onto a first column of the base material, a second step of performing scanning so that an irradiation position is shifted by Pc in a sub-scanning direction, a third step of performing the first step and the second step at a position shifted by Pc in the sub-scanning direction, a fourth step of repeating the second step and the third step once or a plurality of times, and a fifth step of repeating the fourth step such that, in the main scanning direction, the pulse laser having the irradiation width Pa is applied onto the first column only further (N-1) times while shifting an irradiation position by Pb in the main scanning direction from the first step. Further, an irradiation diameter of the pulse laser is represented by φ, and Pa, Pb, and Pc satisfy φ/2<Pa<φ, Pb=φ/N, and Pc<φ. Further, Pb is not required to be strict and may be zero.

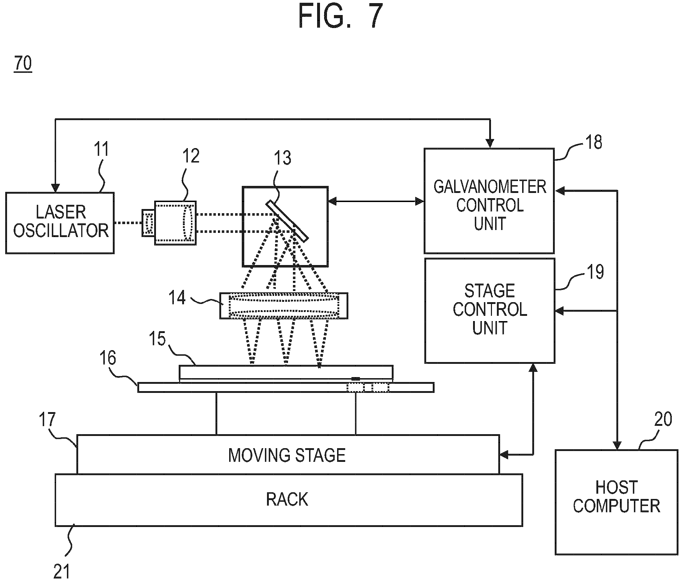

The second embodiment of the present disclosure is described with reference to a schematic configuration diagram of a laser processing machine 70 in the present disclosure illustrated in FIG. 7. In FIG. 7, the laser processing machine 70 is arranged on a rack 21. A fiber laser for oscillating a femtosecond pulse can be used as a laser oscillator 11. A beam diameter of laser light emitted from the laser oscillator 11 is enlarged by a beam expander 12. Then, the laser light is incident on an Fθ lens 14 by a galvanometer mirror 13, and is collected to a base material 15. The base material 15 is fixed to a fixing table 16, and is freely moveable by a moving stage 17. A galvanometer control unit 18 of the laser processing machine controls the laser oscillator 11 and the galvanometer mirror 13. FIG. 7 shows one galvanometer mirror, but two mirrors are required when the laser light is controlled in two-axis directions, and hence the number of mirrors are appropriately selected depending on the application. A stage control unit 19 controls the moving stage 17. When autofocus is performed, control such as vertically moving the moving stage 17 so that a distance between a laser light collecting position and the substrate becomes constant is performed based on a signal from a displacement meter (not shown). A host computer 20 includes a user interface and a processing data storage unit, and can control the control units for the galvanometer mirror 13 and the moving stage 17 in association with each other at predetermined timings.

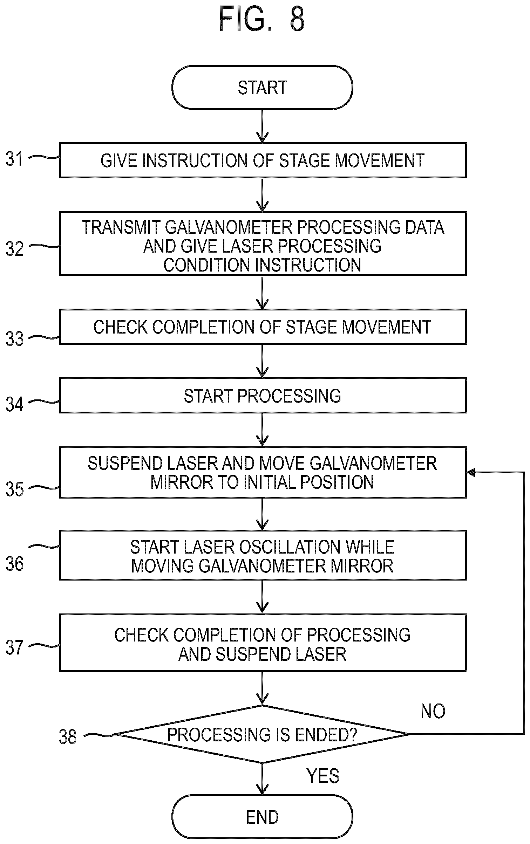

Next, the laser processing process in this embodiment in which the galvanometer mirror drive and the stage movement are combined with each other so that a region that exceeds an area that can be processed by galvanometer mirror drive is processed after performing stage movement is described with reference to FIG. 8 which is a flow chart of the laser processing process in the second embodiment.

After the base material 15 is fixed onto the fixing table 16, reading of an alignment mark, laser processing position correction, and the like are performed so that position information required for processing is acquired and corrected to get ready for the processing. In Step 31, an instruction of movement to a desired position is given to the stage control unit. In Step 32, processing position data is transmitted and an instruction of the laser processing condition is given to the galvanometer control unit. In Step 33, completion of the stage movement is checked, and the processing is started in Step 34. In Step 35, the laser is suspended, and the galvanometer mirror is moved to a desired position. After the movement end of the galvanometer mirror is checked in Step 36, the laser is oscillated while the galvanometer mirror is moved under a desired condition so that the processing is carried out. In Step 37, completion of the processing is checked, and the laser oscillation is suspended. In Step 38, it is determined whether the processing in the galvanometer area has ended, and, when the processing has not ended, the process returns to Step 35. When the processing in the galvanometer area has ended, it is determined that the processing in the galvanometer area has ended, and, when processing in other areas is required, the process returns to Step 31.

In the above-mentioned process, Step 35 to Step 37 are repeated.

During the repetition, the following operations can be repeated. Scanning is performed such that the laser is applied in a line in the main scanning direction, the irradiation is stopped, scanning is performed at a sub-scanning pitch in a direction perpendicular to the main scanning direction, and scanning is performed again in a line in the main scanning direction.

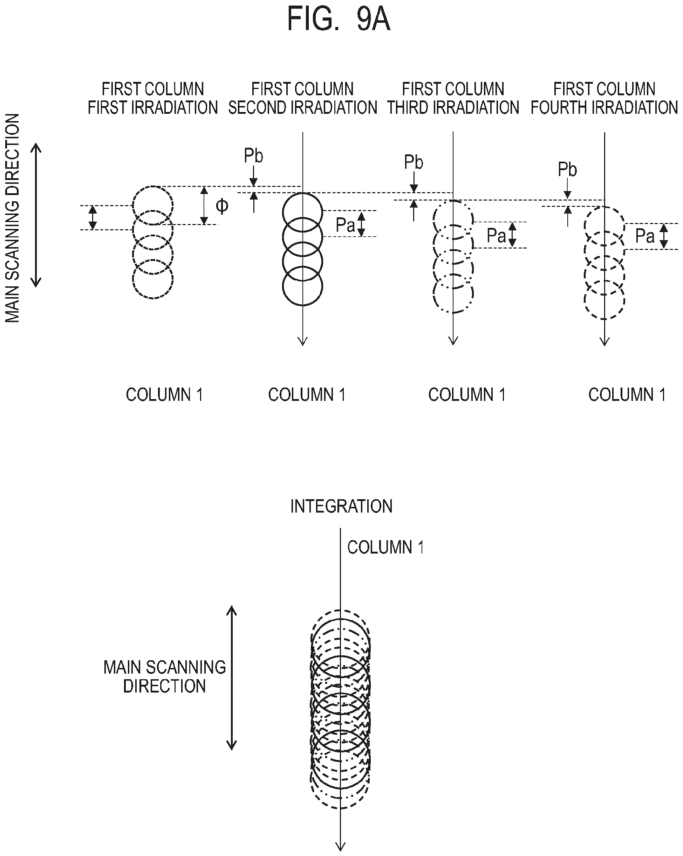

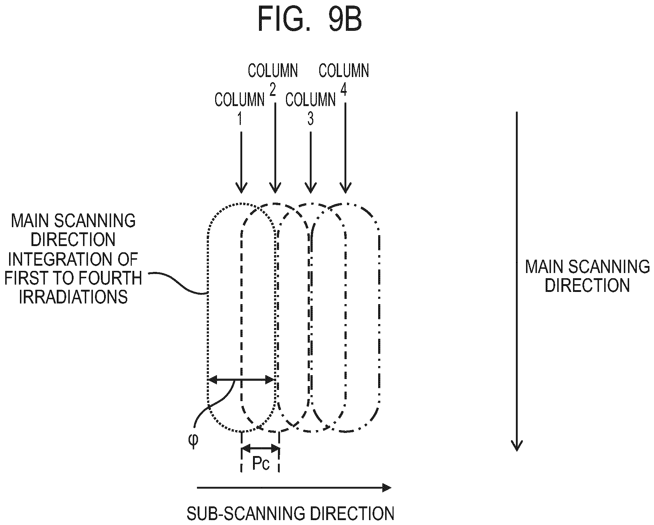

As another example, during the repetition, the above-mentioned first example can be performed. That is, the irradiation in the main scanning direction may be performed a plurality of times on the same line, and the plurality of irradiations can be performed with the beam spots being slightly shifted from each other. Then, an operation in which, after the irradiation in the main scanning direction is repeated a plurality of times (N times), scanning is performed in the sub-scanning direction may be repeated. This method is described with reference to FIG. 9A and FIG. 9B.

FIG. 9A shows an example in which the irradiation in the main scanning direction is repeated to satisfy N=4 for the first column. The first irradiation to the fourth irradiation are shown in parallel for the sake of convenience, but those views show irradiations for the same first column. In the first irradiation, main scanning is performed so that a beam having a beam diameter φ is applied at a pitch Pa. At this time, it is preferred that φ/2<Pa<φ be satisfied. In the second irradiation and the subsequent irradiations, the irradiation is performed so that the beam center at the time of irradiation is shifted by Pb in the main scanning direction from the beam center of the previous time of irradiation. It is preferred that Pb satisfy Pb=cp/N. In the example of FIG. 9A, Pb=cp/4 is satisfied. When this operation is repeated N times, the irradiations for N times are integrated in the main scanning direction. The lower part of FIG. 9A shows integration of four irradiations.

FIG. 9B shows an example in which, for the second column and the subsequent columns, the main scanning is repeated four times while the irradiation position is scanned in the sub-scanning direction. The irradiation for the second column is performed by performing scanning with the beam center being shifted by Pc in the sub-scanning direction from the beam center at the time of the irradiation for the first column, and the irradiation for the third column is performed by performing scanning with the beam center being further shifted by Pc in the sub-scanning direction. It is preferred that Pc satisfy Pc<cp, and further satisfy P≤φ/2.

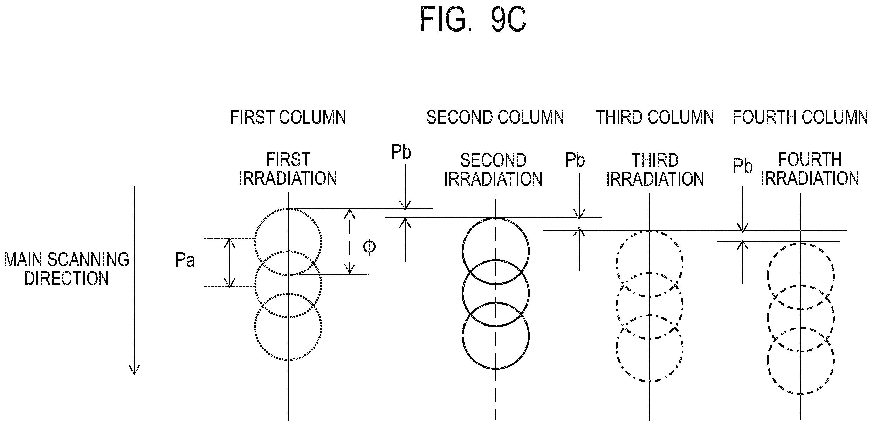

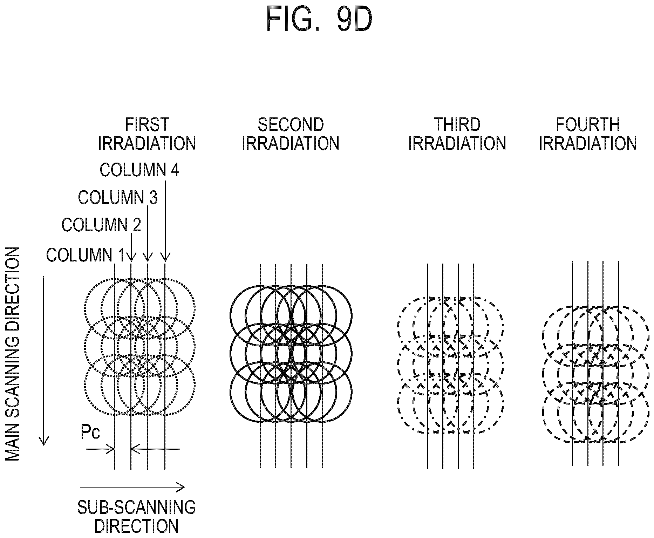

As another example, during the repetition, the above-mentioned second example can be performed. That is, the following operations are repeated. The irradiation is performed in the main scanning direction on the same line, the irradiation position is scanned in the sub-scanning direction, and the irradiation is performed on the next line. Then, those operations may be repeated for the same line. With this repetition, the substrate 3 is processed by from about 1 mm$^2$ to about 10 mm$^2$ , and this operation is further repeated to perform the processing. This method is described with reference to FIG. 9C and FIG. 9D.

FIG. 9C shows an example in which the irradiation is performed in the main scanning direction from the first column, the irradiation position is scanned in the sub-scanning direction, and the irradiation is performed on the next line, and those operations are repeated up to the fourth column.

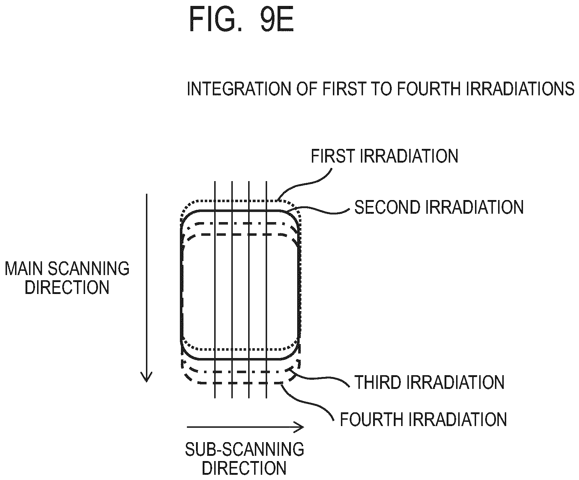

FIG. 9D shows an example in which the irradiation position further returns to the first column in the sub-scanning direction, and the irradiation from the first column to the fourth column is similarly repeated four times while performing scanning. At this time, the irradiation is performed so that the beam center is shifted by Pb in the main scanning direction from the beam center of the previous irradiation. It is preferred that Pb satisfy Pb=cp/N. FIG. 9E shows integration of four irradiations.

As described above, with the method of integrating irradiations in the main scanning direction and the sub-scanning direction while slightly shifting the beam center in the main scanning direction and the sub-scanning direction, a beam spot hits the same location a plurality of times in a short period of time, and the applied light beams interact with each other so that a randomized fine structure is produced. The order of the pass, the number of times of repetition, Pb, Pc, the frequency of the laser, and the like are adjusted so that actions, such as the thermal influence, the optical influence of light, the interference, the interference between applied light beams, the interference between light reflected from the fine structure and the laser light, and the reflection from the fine structure, can be controlled. As a result, for example, fine processing such as the pitch of the concave surface 2 can be controlled. For example, accumulation of heat onto the processing surface can be reduced by reducing the frequency of the applied laser, and control such as reducing the removal amount of the substrate 3 through laser irradiation can be performed.

Further, when an optical component is regarded as the substrate 3, and the structural body 1 is produced by forming the concave surfaces 2 on the surface of the optical component, it is also effective to employ a method of performing processing while suppressing an oxygen concentration in an atmosphere during the processing. As the method of reducing the oxygen concentration, the whole processing apparatus may be placed in a nitrogen atmosphere, or the processing may be performed with a heat dissipation component being installed in a purge box including a laser transmission window. Otherwise, the processing may be performed while a high-purity nitrogen gas is blown to the heat dissipation component, or any other measures may be used.

According to the manufacturing method of this embodiment, with a simple manufacturing process, the structural body 1 of the first embodiment in which an optical component is regarded as the substrate 3 can be obtained without generation of outgas even under a vacuum environment.

Further, when processing is performed not only by the processing method of slightly shifting the beam center as described above but also with adjustment of intensity of the applied laser, fine processing, for example, for the shape of the concave surface 2, can be controlled. For example, when the concave surface 2 exemplified in FIG. 6B is to be formed by processing, it is preferred that the intensity of the laser used in the processing be increased in order for the middle portion 411, the middle portion 412, and the second part 42 of the inner region 4.

Further, when the concave surface 2 exemplified in FIG. 23 is to be formed by processing, it is desired that the intensity of the laser for processing the second inclined surface S2 of the concave surface 2 be set lower than the intensity of the laser for processing the first inclined surface S1 and the intensity of the laser for processing the third inclined surface S3 be set higher than the intensity of the laser for processing the second inclined surface S2.

Further, when the concave surface 2 exemplified in FIG. 24 is to be formed by processing, it is desired that, after the first curved surface R1 of the concave surface 2 is formed by the processing while the intensity of the laser for forming the first curved surface R1 of the concave surface 2 is being gently decreased along with proceeding of the processing to a greater depth, the processing be continued to start forming the second curved surface R2 and proceed to a greater depth while the intensity of the laser is being increased again.

In order to adjust the intensity of the laser, there exist an adjustment method of externally controlling laser oscillation energy of the laser oscillator 11 illustrated in FIG. 7 and an adjustment method of inserting an optical element (not shown) capable of changing a transmittance of the laser between the laser oscillator 11 and the beam expander 12. An adjustment instruction value is stored in the host computer 20 in synchronization with the storage of the processing data. The intensity of the laser is adjusted by controlling the laser oscillator 11 and the optical element (not shown) through intermediation of the galvanometer control unit 18.

Further, as a method of controlling the fine processing for, for example, the shape of the concave surface 2, besides the above-mentioned adjustment of the intensity of the laser, the processing pitches Pa, Pb, Pc of the pulse laser may be adjusted along with the proceeding of the processing to a greater depth, or the order of the pass, the number of times of repetition, the frequency of the laser, and the like may be adjusted. Further, a combination thereof may be used. When the laser oscillator 11 has a function to change pulse oscillation time of the pulse laser, the pulse oscillation time may be adjusted or the adjustment of the pulse oscillation time may be used in combination with the adjustments described above.

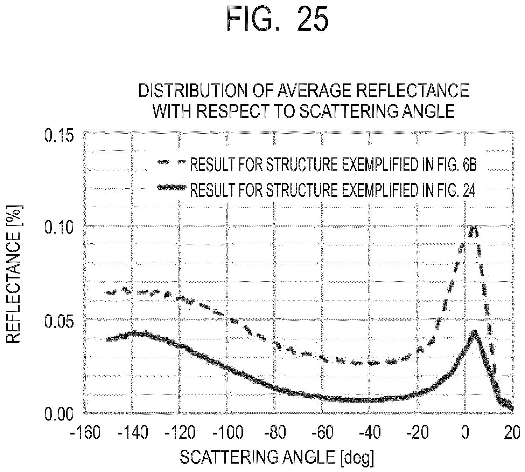

In FIG. 25, there are shown results of actual measurement of reflectances of the structural bodies 1, which are obtained by actually changing the shape of the concave surface 2. The result indicated by the broken line in FIG. 25 corresponds to the result for the structural body 1 having the shape exemplified in FIG. 6B. The result indicated by the solid line in FIG. 25 corresponds to the result for the structural body 1 having the shape exemplified in FIG. 24. In the structural body 1 having the shape exemplified in FIG 6B, the angle d1 is 65 degrees, and the angle d2 is 78 degrees. In the structural body 1 having the shape exemplified in FIG. 24, the angle d1 is 85 degrees, and the angle d2 is 78 degrees. The results of actual measurement of the reflectances are shown in FIG. 25 having a horizontal axis representing a scattering angle and a vertical axis representing the reflectance. The scattering angle in FIG. 25 is an angle at which light having a wavelength of k=800 nm being incident at an angle of 80 degrees (corresponding to $\beta$=10 degrees) with respect to the reference plane 8 of the structural body 1 travels after being scattered by the structural body 1. Both of the structural body 1 having the shape exemplified in FIG. 6B and the structural body 1 having the shape exemplified in FIG. 24 had the reflectance less than 1%, and thus the reflectance was efficiently decreased in a successful manner. The structural body 1 having the shape exemplified in FIG. 24 had the reflectance further lower than the reflectance of the structural body 1 having the shape exemplified in FIG. 6B. As described above, the shape illustrated in FIG. 24 has the first curved surface R1 that allows the length of the region "a" to be reduced, and thus enables minimization of the reflection of the light L2 and efficient absorption of the light L.

<Third Embodiment>

The present disclosure provides, as a third embodiment, a method of manufacturing the structural body 1 of the first embodiment in which the structural body 1 is obtained by transferring, onto a resin, a concavo-convex structure of a forming mold having the concavo-convex structure. This method can include a step of forming a forming mold by subjecting a forming mold material to laser processing, and a step of injection molding a resin through use of the forming mold.

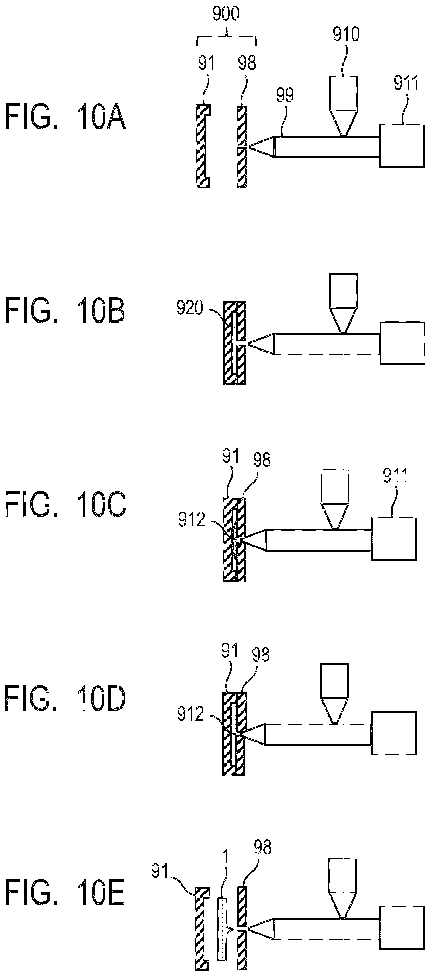

The third embodiment is described with reference to schematic process views of FIG. 10A to FIG. 10E.

FIG. 10A to FIG. 10E show respective stages of the process of manufacturing the structural body 1 by injection molding. A first forming mold 91 forming a forming mold 900 includes the structural body 1 produced in the second embodiment, and has a concavo-convex structure on its surface. An injection molding machine illustrated in FIG. 10A to FIG. 10E includes a pressure device 911 communicating with a cylinder 99, and a hopper 910 for loading a resin material.

A screw (not shown) is provided inside of the cylinder 99, and is driven to rotate by a drive source such as a motor (not shown) so that the resin material inside of the hopper 910 is sent to a distal end of the cylinder 99. Further, a heater (not shown) is provided in the cylinder 99, and the resin material loaded by the hopper 910 is heated to a glass transition temperature or more in the middle of being conveyed inside of the cylinder 99 toward the distal end thereof. Thus, the resin material is melted into a liquid. Then, the resin material is accumulated in a space in a distal end portion of the cylinder 99.

The first forming mold 91 has the concavo-convex structure on its surface as described above. A second forming mold 98 is subjected to mold closing with the first forming mold 91 at the time of forming a cavity 920.

The resin material is loaded to the hopper 910. First, as a forming mold preparing step, as illustrated in FIG. 10A, the forming mold (900) is mounted to the injection molding machine. Then, through use of a drive mechanism (not shown), as illustrated in FIG. 10B, the first forming mold 91 and the second forming mold 98 are subjected to the mold closing. Before the mold closing or at the time point of the mold closing, the first forming mold 91 and the second forming mold 98 are heated by a heater (not shown). A heating temperature of the molds in this step is called "mold temperature."

Subsequently, an injection step of FIG. 10C, and a pressure keeping step and a cooling step of FIG. 10D are carried out. In the injection step of FIG. 10C, a molten resin 912 is injected by the pressure device 911 from the cylinder 99 into the cavity 920 formed by the first forming mold 91 and the second forming mold 98. The pressure device 911 includes a hydraulic cylinder or the like. Moreover, in the pressure keeping step and the cooling (solidifying) step of FIG. 10D, for example, the pressure device 911 applies a pressure to the molten resin 912 in the cavity 920 with a setting pressure that can transfer the molten resin onto the forming mold to form the fine shape, and this pressure is kept for a predetermined time period (pressure keeping). In this manner, the pressure of the molten resin 912 in the cavity is kept to a pressure-keeping pressure.

Subsequently, the first forming mold 91 and the second forming mold 98 are cooled so that the molten resin 912 is cooled to a temperature equal to or lower than the glass transition temperature, allowing the molten resin 912 to transition from a liquid to a solid. The first forming mold 91 and the second forming mold 98 are cooled by, for example, a mechanism (not shown) for circulating a coolant for cooling around the forming mold 900. After that, a mold opening step and a mold release step of FIG. 10E are performed. The mold release is performed by, for example, causing an ejector pin passing through the forming mold to protrude into the cavity. With the above-mentioned steps being repeated, a large number of structural bodies 1 can be manufactured.

According to the manufacturing method of this embodiment, with a simple manufacturing process, the structural body 1 of the first embodiment can be manufactured by a method that does not generate outgas even under a vacuum environment. Further, according to the manufacturing method of this embodiment, the structural body 1 of the first embodiment can be mass-produced in a short period of time and at low cost.

<Other Embodiment>

Further, the present disclosure provides, as another embodiment, a member including the structural body 1 of the first embodiment. The member may be formed of the structural body 1, or may include a support for supporting the structural body 1.

Further, the present disclosure provides an optical apparatus including the structural body 1 of the first embodiment. In recent years, there has been a demand for further reduction of reflected light and scattered light in optical apparatus and the like in order to increase its performance. Further, components are becoming complex in shape and becoming smaller in size year by year. In addition, the variety of adaptable environments is increasing. The first embodiment is relatively easily producible, and the three-dimensional substrate 3 can have this structure. The substrate itself has the concavo-convex shape, and hence, as compared to a case in which the concavo-convex shape is produced by film formation, a fear of peeling of the film due to oil, vibration, heat, or the like is alleviated. In particular, there is a fear of the presence of outgas in a vacuum environment. Further, the substrate itself has the concavo-convex shape, and hence a high strength can be obtained regardless of the fine concavo-convex shape, and accordingly there is an advantage in that the concavo-convex shape itself is less liable to be damaged.

Examples of the member including the structural body 1 of the first embodiment include an optical member and a lens each formed of the structural body 1 of the first embodiment, and a barrel and a casing each including the structural body 1 of the first embodiment on its inner wall. Further, examples of the optical apparatus including the structural body 1 of the first embodiment include binoculars, a microscope, a semiconductor exposure device, camera systems, such as a digital still camara and a digital video camera, and an image pickup apparatus, such as a mobile phone, including an image pickup element for receiving light that has passed through the optical member of the present disclosure.

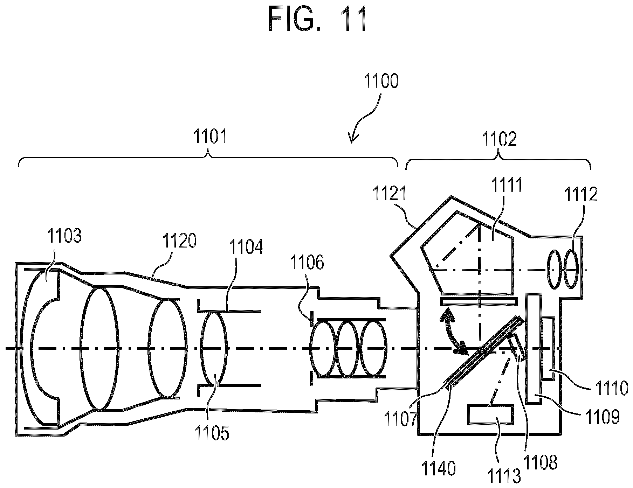

FIG. 11 shows a configuration of a digital single-lens reflex camera 1100 which is one example of the optical apparatus of this embodiment.

In the digital camera 1100 illustrated in FIG. 11, a camera main body 1102 and a lens barrel 1101 are coupled to each other, but the lens barrel 1101 is a so-called interchangeable lens that can be removably mounted to the camera main body 1102.

Light from an object passes through an optical system including, for example, a plurality of lenses 1103 and 1105 arranged on an optical axis of a photographing optical system in a casing 1120 of the lens barrel 1101, and is received by an image pickup element 1110.

In this configuration, the member of this embodiment is, for example, a casing 1121, an inner barrel 1104, or the lens barrel 1101. The casing 1121 and the lens barrel 1101 each include the structural body 1 of the first embodiment and a support.

During an observation period before photographing, the light from the object is reflected by a main mirror 1107 in the casing 1121 of the camera main body 1102, passes through a prism 1111, and then passes through a viewfinder lens 1112 so that an image to be photographed is shown for a photographer. The main mirror 1107 is, for example, a half mirror, and light that has passed through the main mirror 1107 is reflected by a sub-mirror 1108 in a direction of an autofocus (AF) unit 1113. For example, this reflected light is used for distance measurement. Further, the main mirror 1107 is mounted to and supported by a main mirror holder 1140 through adhesion or the like. At the time of photographing, the main mirror 1107 and the sub-mirror 1108 are moved outside of the optical path via a drive mechanism (not shown), and a shutter 1109 is opened so that a photographing light image that has been incident on the image pickup element 1110 from the lens barrel 1101 is imaged. Further, a diaphragm 1106 is configured to change brightness and a focus depth at the time of photographing by changing an aperture area thereof.

[Examples]

<Simulation of Structural Body of First Embodiment>

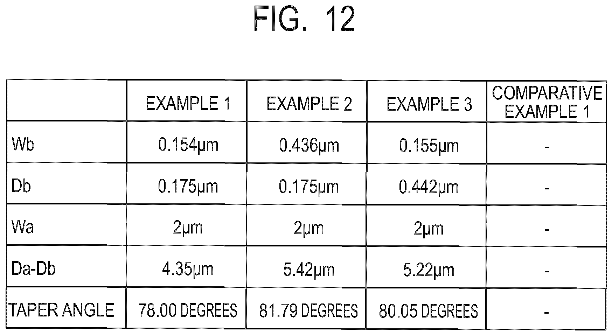

Simulations were performed for structural bodies 1 of Examples 1 to 3 and for Comparative Example 1 including no concave surface 2. FIG. 12 shows dimensions in each of Examples 1 to 3 and Comparative Example 1. The structural bodies of Examples 1 to 3 and Comparative Example 1 all had the same size. The wavelength λ of the light L was set to from 350 nm to 850 nm. When the shortest wavelength in the range of the light L being the target is represented by λmin and the longest wavelength therein is represented by λmax, λmin is 350 nm, and λmax is 850 nm.

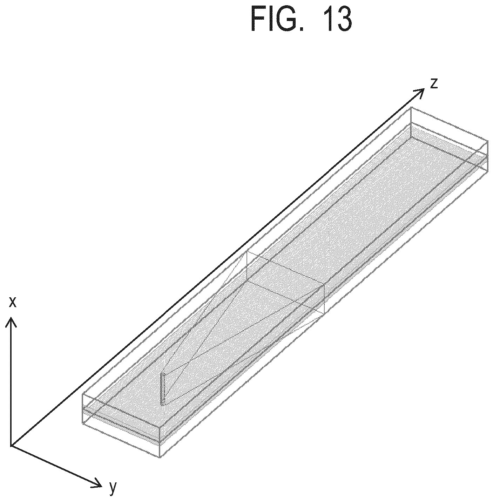

An electromagnetic field simulation using the FDTD method was performed through use of the shapes of Examples 1 to 3 and Comparative Example 1 as models. A space of the electromagnetic field simulation was a three-dimensional space. As illustrated in FIG. 13, an x-axis was defined as a structural body horizontal direction, a y-axis was defined as a structural body depth direction, and a z-axis was defined as a structural body thickness direction. Further, the x-axis and y-axis directions applied a periodic boundary condition so that a situation in which the concave surface 2 was infinitely expanded was simulated. A range of a unit space was set to 2 μm in the x-axis direction, 12 μm in the z-axis direction, and 0.2 μm in the y-axis direction. The structural body including the inner region was present in this unit space, and its size was set to 2 μm in the x-axis direction, 6 μm in the z-axis direction, and 0.2 μm in the y-axis direction. The material of the substrate 3 was set to pure aluminum. A space other than the structural body in the unit space was entirely in a vacuum. In the following, a vacuum region is referred to as "air." An incident direction of the light L (electromagnetic wave) was set to be from the top to the bottom in the z-axis direction, that is, from the air toward the structural body. At this time, the wave of the light L was polarized light having an electric field oscillating in a direction perpendicular to a traveling direction.

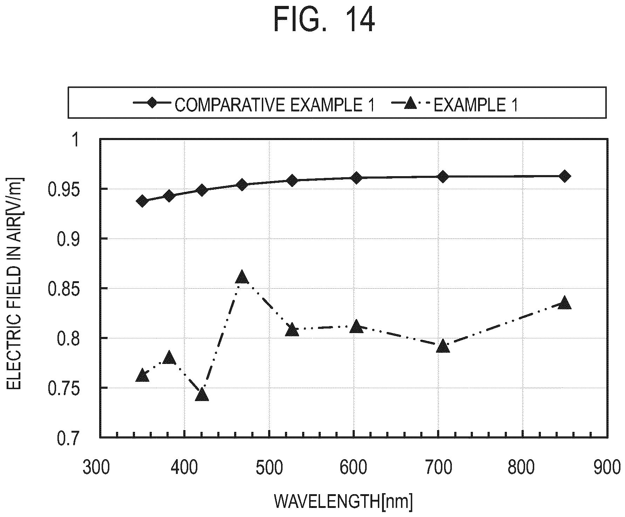

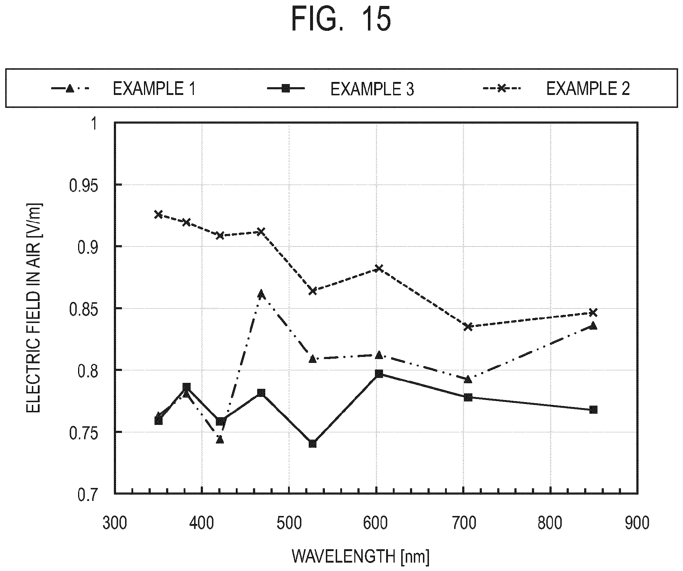

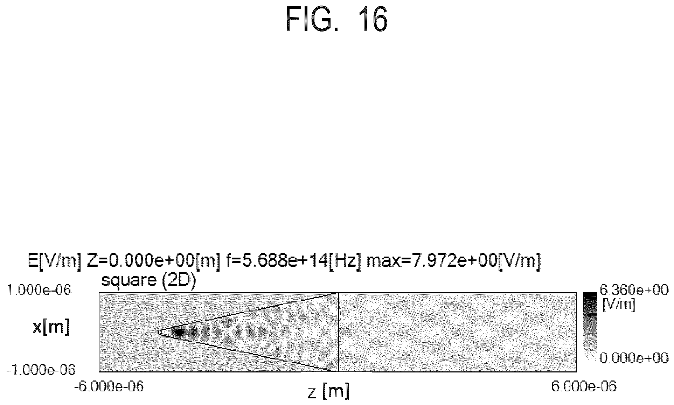

Results are shown in the graphs of FIG. 14 and FIG. 15 and the distribution diagrams of from FIG. 16 to FIG. 18.

The shape of Example 1 is as follows. The width at the height of 0.224 μm from the bottom is 0.175 μm, the width at the height of 0.350 μm from the bottom is 0.228 μm, the width at the height of 0.400 μm from the bottom is 0.250 μm, and the width at the height of 0.527 μm from the bottom is 0.303 μm. As shown in FIG. 12, the size corresponding to Wb was 0.154 μm, and the size corresponding to Db was 0.175 μm. The size corresponding to Wa was 2 μm, and the size corresponding to Da-Db was 4.35 μm.

FIG. 14 is a graph for showing simulation results obtained by comparing and examining Example 1 and Comparative Example 1. The horizontal axis represents the wavelength of the light L, and the vertical axis represents an average value of an electric field in air. This average value of the electric field is a value excluding an incident wave, and represents only a reflected wave. As compared to the electric field of Comparative Example 1, the electric field of Example 1 is smaller. That is, Example 1 has a smaller intensity of reflected light returning into air.

Further, FIG. 16 shows an electric field distribution excluding the incident wave of Example 1 when light L having a wavelength of 527 nm was used. The electric field is largest at a position of about 1/2 of the wavelength in the z-direction, and the electric field is attenuated at a position deeper by 1/2 of the wavelength from this position. In a further deeper region, the electric field is the same as that of the structural body and becomes constant, and no amplitude is observed. This result is obtained by a light trapping effect obtained by the second part 42. Further, with the concave surface 2 forming the first part 41, the electric field is gradually attenuated through diffraction and interference caused complicatedly from a deep portion to the surface, and the electric field in air is reduced. Thus, the anti-reflection effect can be obtained.

The shape of Example 2 is as follows. The width at the height of 0.0179 μm from the bottom is 0.175 μm, and the width at the height of 0.35 μm from the bottom is 0.486 μm. As shown in FIG. 12, the size corresponding to Wb was 0.436 μm, and the size corresponding to Db was 0.175 μm. The size corresponding to Wa was 2 μm, and the size corresponding to Da-Db was 5.42 μm.

The shape of Example 3 is as follows. The width at the height of 0.350 μm from the bottom is 0.137 μm, the width at the height of 0.400 μm from the bottom is 0.150 μm, the width at the height of 0.442 μm from the bottom is 0.155 μm, the width at the height of 0.457 μm from the bottom is 0.175 μm, and the width at the height of 0.527 μm from the bottom is 0.199 μm. As shown in FIG. 12, the size corresponding to Wb was 0.155 μm, and the size corresponding to Db was 0.442 μm. The size corresponding to Wa was 2 μm, and the size corresponding to Da-Db was 5.22 μm.

The shape of Example 3 satisfies Expressions 1 to 3 at λ≥350 nm.

FIG. 15 is a graph for showing simulation results obtained by comparing and examining Examples 1 to 3. Similarly to FIG. 14, the horizontal axis represents the wavelength of the light L, and the vertical axis represents the average value of the electric field excluding the incident wave in air.

As compared to Examples 1 and 2, Example 3 had a smaller electric field in a wide wavelength range. It is considered that the reason therefor is because, in Example 3, when Da-Db is large, the concave surface 2 is sufficiently wide, and the number of times of reflection from when the light L is incident on the structural body 1 to when the light L returns to the reference plane 8 is large, resulting in that the light L is sufficiently absorbed and the intensity thereof is thus reduced.

Example 3 has a shape in which Db is larger than those of Examples 1 and 2. It is considered that the reason therefor is because, in Example 3, the light L can be sufficiently trapped in the first part 41.

Example 2 had a higher electric field in a wide wavelength range as compared to Examples 1 and 3.

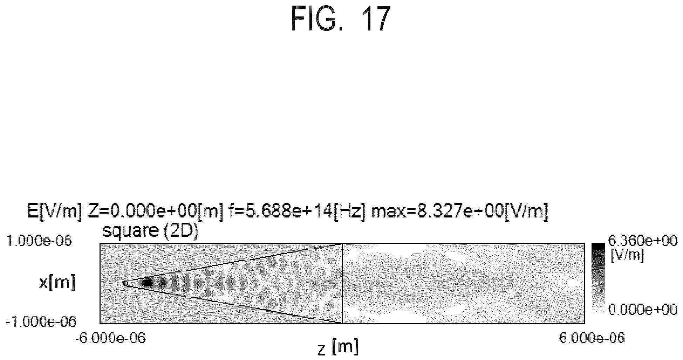

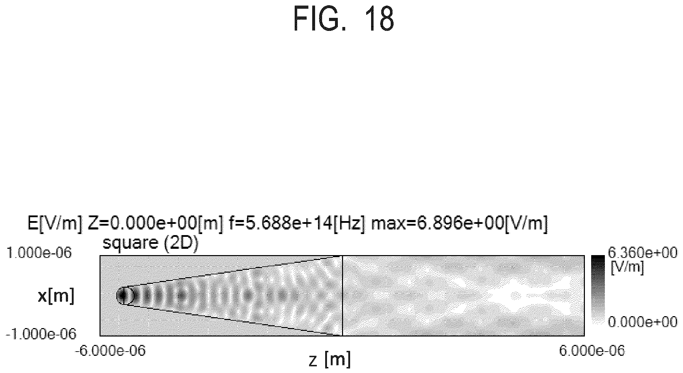

FIG. 17 shows an electric field distribution excluding an incident wave of Example 3 at the time of a wavelength of 527 nm. FIG. 18 shows an electric field distribution excluding an incident wave of Example 2 at the time of a wavelength of 527 nm. There can be observed a state in which, as compared to the electric field distribution of Example 3 of FIG. 17, in the electric field distribution of Example 2 of FIG. 18, the light L is incident on the structural body without being trapped to the vicinity of the bottom 5 of the concave surface 2. Thus, it is understood that the shape of the second part 42, in particular, Wb is important.

This simulation simulated the structural body 1 in which the same concave surface shapes were two-dimensionally arranged at a pitch of 2 $\mu$m, but the shape of the concave surface 2 is not limited thereto. Further, an average cycle of the pitch is preferably larger than 1 $\mu$m, but any one of a periodic arrangement having regularity or a random arrangement may be employed.

<Manufacture of Structural Body by Manufacturing Method of Second Embodiment>

The structural bodies 1 of Examples 4, 5, and 6 were obtained by, as described above, installing an optical component regarded as the substrate 3 on the laser processing apparatus illustrated in FIG. 7 and performing laser processing. The material of the optical component was an Invar material which is a low thermal expansion material. When the Invar material is used for the substrate 3 of the optical component, deformation due to the temperature influence can be reduced, and the influence on the optical performance can be decreased.

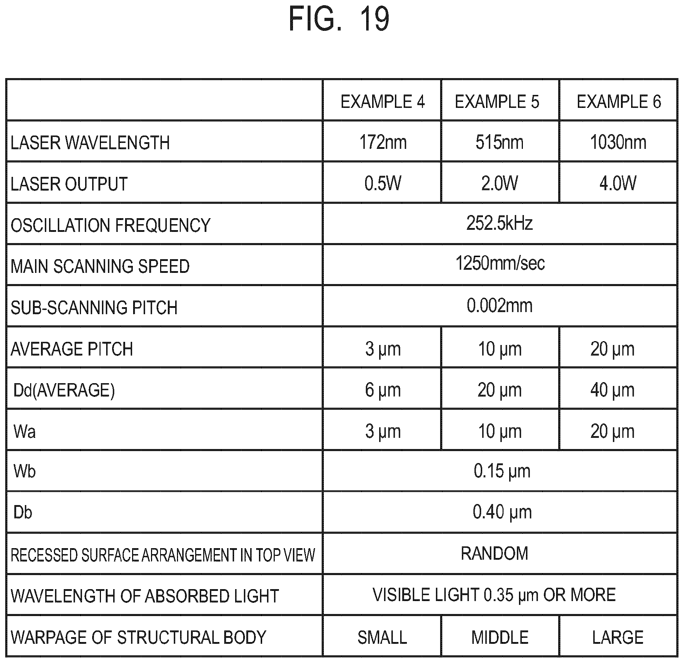

FIG. 19 shows, for each of Examples 4 to 6, the laser oscillator wavelength at the time of production of the structural body 1, the laser processing conditions, the average pitch of the concave portion which is a processing result, the average of Dd, Wa, Wb, Db, the wavelength of the absorbed light L, and the warpage influence of the optical component.

The relationship of the locus of the laser processing and the item of the processing condition shown in FIG. 19 is described. The laser processing was performed by the processing method described in the second example of the second embodiment while the irradiation was performed with the set output and oscillation frequency.

The pitch and the depth of the structural body 1 can be changed depending on the laser wavelength selected when the laser processing is used. As Dd of the structural body 1 becomes smaller, the removal amount to be removed by the processing can be reduced, and hence the entire warpage of the optical component after the end of the processing can be reduced. That is, the laser wavelength can be selected depending on the thickness of the substrate 3 and the desired dimensional tolerance.

In all Examples 4 to 6, the respective numerical values were able to be satisfied regardless of the laser wavelength or output. The oscillation frequency is sufficiently larger than the main scanning speed, and hence the same location is irradiated with a plurality of pulses in a superimposed manner. A groove is formed as the concave surface 2 by an initial pulse, and the pulses emitted later are, for example, reflected on a side surface of the groove to deeply dig the center of the groove. Thus, the fine concave surface 2 is formed.

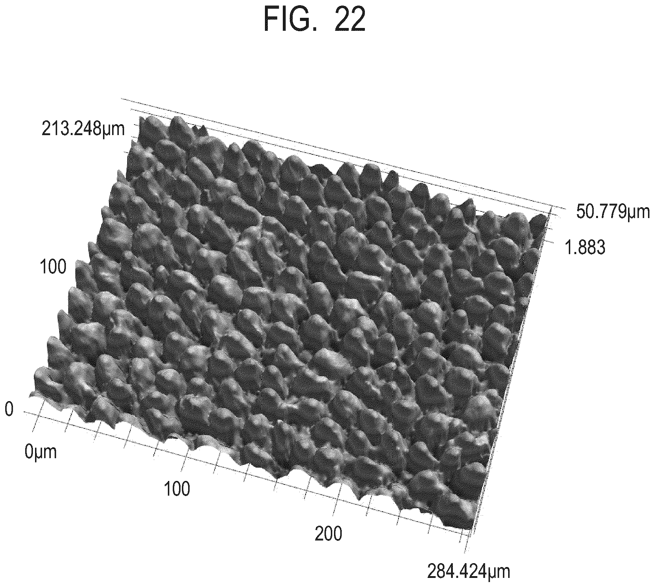

With the laser processing, all of the structural bodies 1 of Examples 4 to 6 were able to be produced as shown in FIG. 19. That is, there was obtained a structural body 1 including concave portions each having Wa of 3 $\mu$m, 10 $\mu$m, or 20 $\mu$m, Wb of 0.15 $\mu$m, Db of 0.40 $\mu$m, and the concave surface shape in top view being randomized. Further, there was obtained an optical component which absorbs incident light having a wavelength of 0.35 $\mu$m or more and has the anti-reflection function. FIG. 22 shows an image of the structural body 1 of Example 6. This image was obtained by observing the structural body 1 at a magnification of 50 times through use of a laser microscope (VK-X3000: manufactured by KEYENCE CORPORATION). A concavo-convex shape in which a large number of concave surfaces 2 are randomly arranged can be observed.

An Invar material was used for the material of the optical component, but a steel material, nickel and an alloy thereof, copper and an alloy thereof, aluminum and an alloy thereof, molybdenum, niobium, tantalum, rhenium, hafnium, zirconium, and yttrium are also applicable thereto.

The optical component may be processed in a nitrogen atmosphere. The processing in the nitrogen atmosphere is particularly effective for, among materials of the optical component, an easily oxidizable material. In the laser processing, debris is generated from the material melted by heat and solidified. In the easily oxidizable material, the debris is combined with oxygen and physical properties thereof change, resulting in a disadvantageous effect on the stability of the laser processing. Thus, the processing stability can be improved when the processing is performed in the nitrogen atmosphere.

<Manufacture of Structural Body by Manufacturing Method of Third Embodiment>

Next, Examples in which injection molding was used to transfer an anti-reflection surface onto a resin component are shown.

Structural bodies 1 of Examples 7 to 9 were manufactured by injection molding illustrated in FIG. 10A to FIG. 10E. In this case, an injection molding machine J180EL III (product name) manufactured by The Japan Steel Works, Ltd. was used as the injection molding machine. Further, a mold steel material is used as the material of the forming mold. There was used, as the resin material loaded from the hopper 910, for example, a resin material obtained by coloring glass filler-containing polycarbonate G3430H produced by TEIJIN LIMITED by a colorant to black.

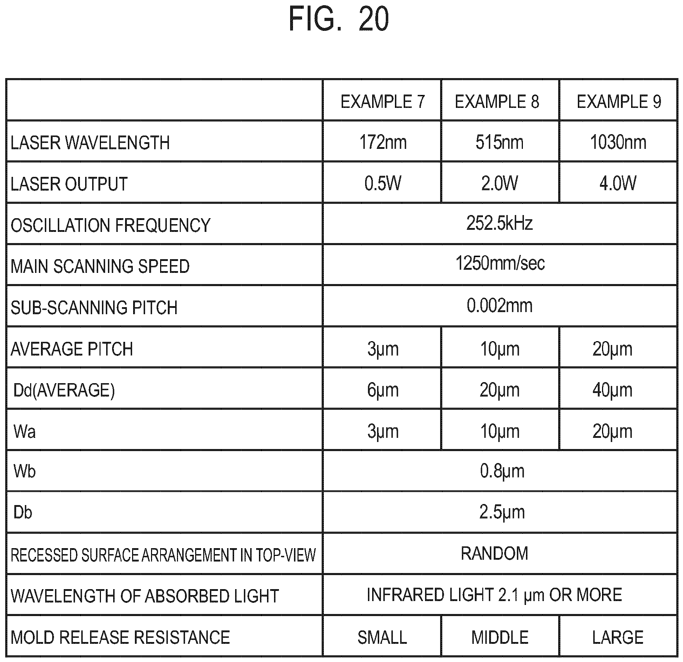

FIG. 20 shows, for each of Examples 7 to 9, the laser oscillator wavelength at the time of production of the forming mold, the laser processing conditions, the average pitch of the concavo-convex structure, the depth and the average of Dd of the structural body 1, Wa, Wb, Db, the wavelength of the absorbed light L, and the mold release resistance.

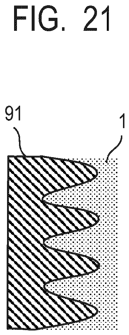

FIG. 21 is a schematic representation of mold-transfer of the forming mold surface. The processing conditions of the mold surface of FIG. 21 are the same as those of the second example. As shown in FIG. 21, the concave surface 2 of the structural body 1 of each of Examples 7 to 9 was formed as a resin component having the shape of the convex portion 7 of the forming mold 91 transferred thereon.

The average of Dd affected the mold release resistance in injection molding. The mold release resistance became smaller as Dd became smaller, and the entire warpage deformation or the like of the resin component was able to be suppressed.

All of the structural bodies 1 of Examples 7 to 9 were able to be produced as shown in FIG. 20. That is, there was obtained a structural body 1 including concave surfaces each having Wa of 3 $\mu$m, 10 $\mu$m, or 20 $\mu$m, Wb of 0.8 $\mu$m, Db of 2.5 $\mu$m, and the concave surface shape in top view being randomized. Further, a resin component which absorbs incident light having a wavelength of 2.1 $\mu$m or more and has the anti-reflection function was able to be mass-produced in a short period of time and at low cost.

A mold steel material was used as the material of the forming mold in Examples, but a nickel alloy or a copper alloy may also be used. In addition, glass filler-containing polycarbonate was used as the resin, but glass filler-free polycarbonate, acrylonitrile-butadiene-styrene, polyoxymethylene, polyphthalamide, polypropylene, polybutylene terephthalate, a fluororesin, or polyamide may also be used as the resin.

Further, the forming mold may be produced in a nitrogen atmosphere. The production in the nitrogen atmosphere is particularly effective for a case in which a material of the forming mold is easily oxidizable. In the laser processing, debris is generated from the material melted by heat and solidified. In the easily oxidizable material, the debris is combined with oxygen and physical properties thereof change, resulting in a disadvantageous effect on the stability of the laser processing. Thus, the processing stability can be improved when the production is performed in the nitrogen atmosphere.

In Examples, injection molding was used as the transfer technology, but roll forming or press forming may be performed instead.

According to the present disclosure, a technology that is advantageous for achieving a structural body capable of sufficiently absorbing light is provided.

While the present disclosure has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A structural body for absorbing light which incidents the structural body and has a wavelength $\lambda$, the structural body comprising a substrate having a plurality of concave surfaces on an incident surface of the light,

   wherein the light incidents an inner region of each concave surface of the plurality of concave surfaces,
   wherein the light satisfies 400 nm$\leq k \leq$40 $\mu$m, and wherein each concave surface of the plurality of concave surfaces satisfies Dd$\geq$Da>Db>$\lambda$, Wa>$\lambda$, and Wb$\leq \lambda$/2, where Dd represents a depth of a bottom of each concave surface of the plurality of concave surfaces, Wa represents a width of the inner region at a position of a distance Da from the bottom of each concave surface of the plurality of concave surfaces, and Wb represents a width of the inner region at a position of a distance Db from the bottom.

2. The structural body according to claim 1, wherein Wa$\geq 2\lambda$ is satisfied.

3. The structural body according to claim 1 or 2, wherein each concave surface of the plurality of concave surfaces satisfies $\lambda \geq$Dc and Wc$\leq \lambda$/4, where Wc represents a width of the inner region at a position of a distance Dc from the bottom of each concave surface of the plurality of concave surfaces.

4. The structural body according to any one of claims 1 to 3,

   wherein the plurality of concave surfaces include a first concave surface and a second concave surface, and
   wherein Ge$\leq$100 $\mu$m is satisfied, where Ge represents a distance between the first concave surface and the second concave surface at a position of a distance De from a bottom of the first concave surface, provided that Dd$\geq$De$\geq$Da.

**5.** The structural body according to any one of claims 1 to 4,

wherein the plurality of concave surfaces include a first concave surface and a second concave surface, and
wherein Ge<Wa is satisfied, where Ge represents a distance between the first concave surface and the second concave surface at a position of a distance De from a bottom of the first concave surface, provided that Dd≥De≥Da.

**6.** The structural body according to any one of claims 1 to 5,

wherein the plurality of concave surfaces include a first concave surface and a second concave surface, and
wherein Go≥Wa is satisfied, where Go represents a distance between a bottom of the first concave surface and a bottom of the second concave surface.

**7.** The structural body according to any one of claims 1 to 6,

wherein the plurality of concave surfaces include a first concave surface and a second concave surface, and
wherein Go≥1 μm is satisfied, where Go represents a distance between a bottom of the first concave surface and a bottom of the second concave surface.

**8.** The structural body according to any one of claims 1 to 7, wherein an extinction coefficient of the substrate with respect to the light is larger than 1.0.

**9.** The structural body according to any one of claims 1 to 8, wherein, in plan view with respect to the incident surface, one of the number of the plurality of concave surfaces or the number of convex portions forming the plurality of concave surfaces is 100 surfaces or portions/mm$^2$ or more.

**10.** The structural body according to any one of claims 1 to 9, wherein, in plan view with respect to the incident surface, the plurality of concave surfaces are two-dimensionally arranged.

**11.** The structural body according to any one of claims 1 to 10, wherein each concave surface of the plurality of concave surfaces has a taper angle θ of 60 degrees or more in a part in which a distance from the bottom is 2Dd/3 or more and 9Dd/10 or less.

**12.** The structural body according to any one of claims 1 to 11, wherein the inner region has a width that gradually decreases from the position of the distance Da from the bottom toward the position of the distance Db from the bottom.

**13.** The structural body according to any one of claims 1 to 12, wherein the plurality of concave surfaces include a concave surface in which a width of the inner region is Wb or more and λ/2 or less from the distance Db to a distance Df from a bottom of the concave surface, provided that Da≥Df>Db.

**14.** The structural body according to any one of claims 1 to 13, wherein the substrate is made of one of a metal or a resin.

**15.** The structural body according to any one of claims 1 to 14,
wherein:

1) each concave surface of the plurality of concave surfaces includes a first inclined surface and a second inclined surface, the second inclined surface being positioned on a side closer to the bottom of the concave surface than the first inclined surface, and

wherein, when a plane being in contact with a plurality of convex portions forming the concave surface is set as a reference plane, an angle d1 formed between the first inclined surface and the reference plane and an angle d2 formed between the second inclined surface and the reference plane satisfy:

$$d1 > d2,$$

and/or

2) each concave surface of the plurality of concave surfaces includes a first curved surface and a second curved surface, the second curved surface being positioned on a side closer to the bottom of the concave surface than the first curved surface, and
wherein a center of the first curved surface lies inside the concave surface, and a center of the second curved surface lies outside the concave surface.

**16.** An optical apparatus comprising the structural body according to any one of claims 1 to 15.

# FIG. 1A

# FIG. 1B

# FIG. 2

# FIG. 3

## FIG. 4A

## FIG. 4B

# FIG. 4C

# FIG. 4D

# FIG. 4E

# FIG. 4F

# FIG. 5

# FIG. 6A

# FIG. 6B

# FIG. 7

# FIG. 8

START

31 — GIVE INSTRUCTION OF STAGE MOVEMENT

32 — TRANSMIT GALVANOMETER PROCESSING DATA AND GIVE LASER PROCESSING CONDITION INSTRUCTION

33 — CHECK COMPLETION OF STAGE MOVEMENT

34 — START PROCESSING

35 — SUSPEND LASER AND MOVE GALVANOMETER MIRROR TO INITIAL POSITION

36 — START LASER OSCILLATION WHILE MOVING GALVANOMETER MIRROR

37 — CHECK COMPLETION OF PROCESSING AND SUSPEND LASER

38 — PROCESSING IS ENDED?   NO

YES

END

# FIG. 9A

FIRST COLUMN
FIRST IRRADIATION

FIRST COLUMN
SECOND IRRADIATION

FIRST COLUMN
THIRD IRRADIATION

FIRST COLUMN
FOURTH IRRADIATION

MAIN SCANNING DIRECTION

Pb

Φ

Pb

Pa

Pb

Pa

Pb

Pa

COLUMN 1

COLUMN 1

COLUMN 1

COLUMN 1

INTEGRATION

COLUMN 1

MAIN SCANNING
DIRECTION

# FIG. 9B

COLUMN 1 COLUMN 2 COLUMN 3 COLUMN 4

MAIN SCANNING DIRECTION INTEGRATION OF FIRST TO FOURTH IRRADIATIONS

$\varphi$

Pc

SUB-SCANNING DIRECTION

MAIN SCANNING DIRECTION

# FIG. 9C

EP 4 564 065 A1

# FIG. 9D

# FIG. 9E

INTEGRATION OF FIRST TO FOURTH IRRADIATIONS

FIRST IRRADIATION

SECOND IRRADIATION

MAIN SCANNING
DIRECTION

THIRD IRRADIATION

FOURTH IRRADIATION

SUB-SCANNING
DIRECTION

FIG. 10A

FIG. 10B

FIG. 10C

FIG. 10D

FIG. 10E

# FIG. 11

# FIG. 12

|  | EXAMPLE 1 | EXAMPLE 2 | EXAMPLE 3 | COMPARATIVE EXAMPLE 1 |
|---|---|---|---|---|
| Wb | 0.154µm | 0.436µm | 0.155µm | - |
| Db | 0.175µm | 0.175µm | 0.442µm | - |
| Wa | 2µm | 2µm | 2µm | - |
| Da-Db | 4.35µm | 5.42µm | 5.22µm | - |
| TAPER ANGLE | 78.00 DEGREES | 81.79 DEGREES | 80.05 DEGREES | - |

# FIG. 13

# FIG. 14

# FIG. 15

# FIG. 16

E[V/m] Z=0.000e+00[m] f=5.688e+14[Hz] max=7.972e+00[V/m]
square (2D)

# FIG. 17

E[V/m] Z=0.000e+00[m] f=5.688e+14[Hz] max=8.327e+00[V/m]
square (2D)

# FIG. 18

E[V/m] Z=0.000e+00[m] f=5.688e+14[Hz] max=6.896e+00[V/m]

# FIG. 19

| | EXAMPLE 4 | EXAMPLE 5 | EXAMPLE 6 |
|---|---|---|---|
| LASER WAVELENGTH | 172nm | 515nm | 1030nm |
| LASER OUTPUT | 0.5W | 2.0W | 4.0W |
| OSCILLATION FREQUENCY | 252.5kHz | | |
| MAIN SCANNING SPEED | 1250mm/sec | | |
| SUB-SCANNING PITCH | 0.002mm | | |
| AVERAGE PITCH | 3 μm | 10 μm | 20 μm |
| Dd(AVERAGE) | 6 μm | 20 μm | 40 μm |
| Wa | 3 μm | 10 μm | 20 μm |
| Wb | 0.15 μm | | |
| Db | 0.40 μm | | |
| RECESSED SURFACE ARRANGEMENT IN TOP VIEW | RANDOM | | |
| WAVELENGTH OF ABSORBED LIGHT | VISIBLE LIGHT 0.35 μm OR MORE | | |
| WARPAGE OF STRUCTURAL BODY | SMALL | MIDDLE | LARGE |

# FIG. 20

| | EXAMPLE 7 | EXAMPLE 8 | EXAMPLE 9 |
|---|---|---|---|
| LASER WAVELENGTH | 172nm | 515nm | 1030nm |
| LASER OUTPUT | 0.5W | 2.0W | 4.0W |
| OSCILLATION FREQUENCY | 252.5kHz | | |
| MAIN SCANNING SPEED | 1250mm/sec | | |
| SUB-SCANNING PITCH | 0.002mm | | |
| AVERAGE PITCH | 3μm | 10μm | 20μm |
| Dd(AVERAGE) | 6μm | 20μm | 40μm |
| Wa | 3μm | 10μm | 20μm |
| Wb | 0.8μm | | |
| Db | 2.5μm | | |
| RECESSED SURFACE ARRANGEMENT IN TOP-VIEW | RANDOM | | |
| WAVELENGTH OF ABSORBED LIGHT | INFRARED LIGHT 2.1 μm OR MORE | | |
| MOLD RELEASE RESISTANCE | SMALL | MIDDLE | LARGE |

FIG. 21

FIG. 22

213.248μm

50.779μm

1.883

100

0

0μm

100

200

284.424μm

# FIG. 23

# FIG. 24

# FIG. 25

DISTRIBUTION OF AVERAGE REFLECTANCE
WITH RESPECT TO SCATTERING ANGLE

Europäisches
Patentamt

European
Patent Office

Office européen
des brevets

# EUROPEAN SEARCH REPORT

**Application Number**

EP 24 21 6128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/195417 A1 (YAMAMOTO YOSHIHARU [JP] ET AL) 23 August 2007 (2007-08-23) * paragraphs [0032], [0036]; figures 1, 2 * | 1-16 | INV. G02B1/118 G02B5/00 |
| A | EP 3 279 707 A1 (SCIVAX CORP [JP]) 7 February 2018 (2018-02-07) * paragraph [0027]; figure 7(b) * * paragraph [0027] * | 1-16 | |
| A | EP 1 857 841 A1 (MATSUSHITA ELECTRIC IND CO LTD [JP]) 21 November 2007 (2007-11-21) * claims 3-6 * | 1-16 | |
| A | US 2014/029103 A1 (BUDLESKI WILLIAM FRANK [US]) 30 January 2014 (2014-01-30) * figure 11B * | 1-16 | |
| A | EP 3 828 599 A1 (OTSUKA TECHNO CORP [JP]) 2 June 2021 (2021-06-02) * figure 4 * | 1-16 | **TECHNICAL FIELDS SEARCHED (IPC)** G02B |

The present search report has been drawn up for all claims

| Place of search | Date of completion of the search | Examiner |
|---|---|---|
| Munich | 16 March 2025 | Le Masson, Nicolas |

EPO FORM 1503 03.82 (P04C01)

## ANNEX TO THE EUROPEAN SEARCH REPORT
## ON EUROPEAN PATENT APPLICATION NO.

EP 24 21 6128

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2025

| Patent document cited in search report | | | Publication date | Patent family member(s) | | | Publication date |
|---|---|---|---|---|---|---|---|
| US 2007195417 | A1 | | 23-08-2007 | CN | 1930497 | A | 14-03-2007 |
| | | | | EP | 1723448 | A1 | 22-11-2006 |
| | | | | JP | 2007528021 | A | 04-10-2007 |
| | | | | US | 2007195417 | A1 | 23-08-2007 |
| | | | | WO | 2005088355 | A1 | 22-09-2005 |
| EP 3279707 | A1 | | 07-02-2018 | CN | 107533159 | A | 02-01-2018 |
| | | | | EP | 3279707 | A1 | 07-02-2018 |
| | | | | JP | WO2016159045 | A1 | 25-01-2018 |
| | | | | KR | 20170131653 | A | 29-11-2017 |
| | | | | US | 2018074229 | A1 | 15-03-2018 |
| | | | | WO | 2016159045 | A1 | 06-10-2016 |
| EP 1857841 | A1 | | 21-11-2007 | CN | 101082680 | A | 05-12-2007 |
| | | | | EP | 1857841 | A1 | 21-11-2007 |
| | | | | JP | 2007304466 | A | 22-11-2007 |
| | | | | US | 2007291386 | A1 | 20-12-2007 |
| US 2014029103 | A1 | | 30-01-2014 | NONE | | | |
| EP 3828599 | A1 | | 02-06-2021 | CN | 114556161 | A | 27-05-2022 |
| | | | | EP | 3828599 | A1 | 02-06-2021 |
| | | | | JP | 6843400 | B1 | 17-03-2021 |
| | | | | JP | 2021067735 | A | 30-04-2021 |
| | | | | TW | 202122831 | A | 16-06-2021 |
| | | | | US | 2024036233 | A1 | 01-02-2024 |
| | | | | WO | 2021075066 | A1 | 22-04-2021 |

EPO FORM P0459

For more details about this annex : see Official Journal of the European Patent Office, No. 12/82

**EP 4 564 065 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007304466 A

- WO 2016159045 A